# EUROPEAN PATENT APPLICATION

(11) **EP 4 592 250 A1**
(43) Date of publication of application: **30.07.2025**
(21) Application number: 25150881.8
(22) Date of filing: 09.01.2025
(51) Int. Cl.: C01G 53/05, C01G 53/42, C01G 53/504, H01M 4/505, H01M 4/525, C01G 53/84

(54) **POSITIVE ELECTRODE ACTIVE MATERIAL FOR RECHARGEABLE LITHIUM BATTERY AND RECHARGEABLE LITHIUM BATTERY INCLUDING THE SAME**

(30) Priority: 16.01.2024 KR 20240006931
(71) Applicant: SAMSUNG SDI CO., LTD., Yongin-si, Gyeonggi-do 17084 (KR)
(72) Inventor: SHIN, Dongwook, Yongin-si 17084 (KR); CHOI, Aram, Yongin-si 17084 (KR); HONG, Soonkie, Yongin-si 17084 (KR); CHOI, Seungyeon, Yongin-si 17084 (KR); KIM, Soohyeon, Yongin-si 17084 (KR); HA, Jeuk, Yongin-si 17084 (KR); KIM, Minhan, Yongin-si 17084 (KR); LEE, Soonrewl, Yongin-si 17084 (KR)
(74) Representative: Marks & Clerk LLP

(57) **Abstract**

Disclosed are positive electrode active materials, methods of fabricating the same, and rechargeable lithium batteries including the same. The positive electrode active material includes a first particle including a first lithium composite oxide. The first particle includes a first primary particle that extends in a radial direction from a center of the first particle toward a surface of the first particle, and a second primary particle on the surface. An aspect ratio of the first primary particle is about 2 to about 15. An aspect ratio of the second primary particle is about 0.7 to about 3.

## Description

### BACKGROUND

### 1. Field

Embodiments of the present disclosure relate to a positive electrode active material for a rechargeable lithium battery, a method of fabricating the same, and a rechargeable lithium battery including the same, and, for example, to a positive electrode active material including a layered lithium compound, a method of fabricating the same, and a rechargeable lithium battery including the same.

### 2. Description of the Related Art

Recently, with the rapid spread of battery-using electronic devices, such as mobile phones, laptop computers, and electric vehicles, there is a rapidly increasing demand for rechargeable batteries having high energy density and high capacity. Therefore, intensive research has been conducted to improve performance of rechargeable lithium batteries.

A rechargeable lithium battery includes a positive electrode, a negative electrode, and an electrolyte, wherein the positive and negative electrodes include an active material in which intercalation and deintercalation are possible, and generates electrical energy caused by oxidation and reduction reactions if lithium ions are intercalated and deintercalated.

### SUMMARY

An embodiment of the present disclosure provides a positive electrode active material having a high energy density and an excellent high-temperature lifetime.

An embodiment of the present disclosure provides a rechargeable lithium battery having a high energy density and an excellent high-temperature lifetime.

According to an embodiment of the present disclosure, a positive electrode active material includes a first particle including a first lithium composite oxide. The first lithium composite oxide is represented by Chemical Formula 1.

Chemical Formula 1 Liₐ₁Niₓ₁Ma₁₋ₓ₁O_{b1}

In Chemical Formula 1, a1 is about 0.5 to about 1.5, x1 is about 0.6 to about 0.99, b1 is about 1.8 to about 2.2, 1-x1 is about 0.01 to about 0.4, and Ma includes at least one element selected from B, Co, Al, Mn, Na, Mg, Ca, Y, Ti, Hf, V, Nb, Ta, Cr, Mo, W, Zr, Sr, La, Fe, Cu, Ag, Zn, Ga, C, Si, and Sn. The first particle includes: a first primary particle that extends in a radial direction from a center of the first particle toward a surface of the first particle; and a second primary particle on the surface of the first particle. An aspect ratio of the first primary particle is about 2 to about 15. An aspect ratio of the second primary particle is about 0.7 to about 3.

According to an embodiment of the present disclosure, a positive electrode active material includes a first particle including a first lithium composite oxide. The first lithium composite oxide is represented by Chemical Formula 1.

Chemical Formula 1 Liₐ₁Niₓ₁Ma₁₋ₓ₁O_{b1}

In Chemical Formula 1, a1 is about 0.5 to about 1.5, x1 is about 0.6 to about 0.99, b1 is about 1.8 to about 2.2, 1-x1 is about 0.01 to about 0.4, and Ma includes at least one element selected from B, Co, Al, Mn, Na, Mg, Ca, Y, Ti, Hf, V, Nb, Ta, Cr, Mo, W, Zr, Sr, La, Fe, Cu, Ag, Zn, Ga, C, Si, and Sn. The first particle includes: a first primary particle that extends in a radial direction from a center of the first particle toward a surface of the first particle; and a second primary particle on the surface of the first particle. An angle between the radial direction and an a-axis of the first primary particle is about 0° to about 5°. An angle of the radial direction and an a-axis of the second primary particle is about 10° to about 80°.

According to an embodiment of the present disclosure, a rechargeable lithium battery includes the positive electrode active material discussed above.

At least some of the above and other features of the invention are set out in the claims.

### BRIEF DESCRIPTION OF DRAWINGS

The accompanying drawings, together with the specification, illustrate embodiments of the subject matter of the present disclosure, and, together with the description, serve to explain principles of embodiments of the subject matter of the present disclosure.
FIG. 1 illustrates a simplified conceptual diagram showing a rechargeable lithium battery according to some embodiments of the present disclosure.
FIGS. 2-5 illustrate simplified diagrams showing rechargeable lithium batteries according to embodiments.
FIG. 6 illustrates an enlarged view showing a positive electrode active material layer of a rechargeable lithium battery according to some embodiments of the present disclosure.
FIG. 7 illustrates an enlarged view showing a cross-section of a first particle according to some embodiments of the present disclosure.
FIG. 8 illustrates a simplified enlarged cross-sectional view of section M depicted in FIG. 7, showing a first primary particle and a second primary particle.
FIG. 9A illustrates a simplified cross-sectional view showing a first primary particle and a second primary particle into which lithium ions have been intercalated.
FIG. 9B illustrates a simplified cross-sectional view showing a first primary particle and a second primary particle from which lithium ions have been deintercalated.
FIG. 10 illustrates an enlarged view showing a cross-section of a first particle according to a comparative example of the present disclosure.
FIG. 11A illustrates a simplified cross-sectional view showing a first primary particle into which lithium ions are intercalated in a first particle according to a comparative example.
FIG. 11B illustrates a simplified cross-sectional view showing a first primary particle from which lithium ions are deintercalated in a first particle according to a comparative example.
FIG. 12 illustrates a flow chart showing a method of fabricating a first particle according to some embodiments of the present disclosure.
FIGS. 13A, 13B, and 13C illustrate scanning electron microscope (SEM) images showing a first particle of Embodiment 1.
FIG. 14A illustrates a scanning electron microscope (SEM) image showing a cross-section of a first particle of Embodiment 1.
FIG. 14B illustrates a scanning electron microscope (SEM) image showing a cross-section of a first particle of Comparative Example 1.
FIG. 15A illustrates an image showing porosity of a first particle of Embodiment 1.
FIG. 15B illustrates an image showing porosity of a first particle of Comparative Example 1.
FIG. 16A illustrates an image showing a cobalt element of a first particle of Embodiment 1.
FIG. 16B illustrates an image showing a zirconium element of a first particle of Embodiment 1.
FIGS. 17A, 17B, and 17C illustrate graphs showing results of measured amounts of transition metals (Ni, Co, and Al) in shells and cores of first particles of Embodiment 1.
FIGS. 18A and 18B illustrate high-resolution transmission electron microscope (HR-TEM) measurement results of surfaces of first particles of Embodiment 1 and Comparative Example 1, respectively.
FIG. 19 illustrates an XRD spectrum of a first particle of Embodiment 1.
FIG. 20 illustrates a high-resolution transmission electron microscope (HR-TEM) measurement result of a core of a first particle of Embodiment 1.
FIG. 21 illustrates a high-resolution transmission electron microscope (HR-TEM) measurement result of a shell of a first particle of Embodiment 1.

### DETAILED DESCRIPTION

In order to sufficiently understand the configuration and effect of the subject matter of the present disclosure, some embodiments of the present disclosure will be described with reference to the accompanying drawings. It should be noted, however, that the present disclosure is not limited to the following example embodiments, and may be implemented in various suitable forms. Rather, example embodiments are provided only to illustrate the subject matter of the present disclosure and let those of ordinary skill in the art fully know the scope of the present disclosure.

In this description, it will be understood that, if an element is referred to as being on another element, the element can be directly on the other element or intervening elements may be present therebetween. In the drawings, thicknesses of some components may be exaggerated to effectively explain the technical contents. Like reference numerals refer to like elements throughout the specification.

Unless otherwise specially noted in this description, an expression in the singular form may include the expression in the plural form. In embodiments, unless otherwise specially noted, the phrase "A or B" may indicate "A but not B", "B but not A", or "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, and/or a reaction product.

Unless otherwise especially defined in this description, a particle diameter may be an average particle diameter. In embodiments, a particle diameter may indicate an average particle diameter (D50) where a cumulative volume is about 50 volume% in a particle size distribution. The average particle diameter (D50) may be measured by any suitable method generally used in the art, for example, by a particle size analyzer, a transmission electron microscope (TEM) image, and/or a scanning electron microscope (SEM) image. In embodiments, a dynamic light-scattering measurement device may be used to perform a data analysis, the number of particles may be counted for each particle size range, and then from this, the average particle diameter (D50) value may be obtained through a calculation. In embodiments, a laser scattering method may be utilized to measure the average particle diameter (D50). In the laser scattering method, a target particle is distributed in a distribution solvent, introduced into a laser scattering particle-diameter measurement device (e.g., MT3000 commercially available from Microtrac, Inc), irradiated with ultrasonic waves of 28 kHz at a power of 60 W, and then an average particle diameter (D50) is calculated in the 50% standard of particle diameter distribution in the measurement device.

The term "atomic ratio" used in this description may be obtained as a result of analysis of an element on a surface of a positive electrode active material by using energy dispersive X-ray spectroscopy (EDS), and/or SEM-EDS and/or TEM-EDS. Elements on the surface of the positive electrode active material collided with an electron beam may emit a characteristic X-ray. The emitted X-ray may be analyzed through an EDS detector to ascertain a kind and amount of a corresponding element. The obtained amount may correspond to the atomic ratio.

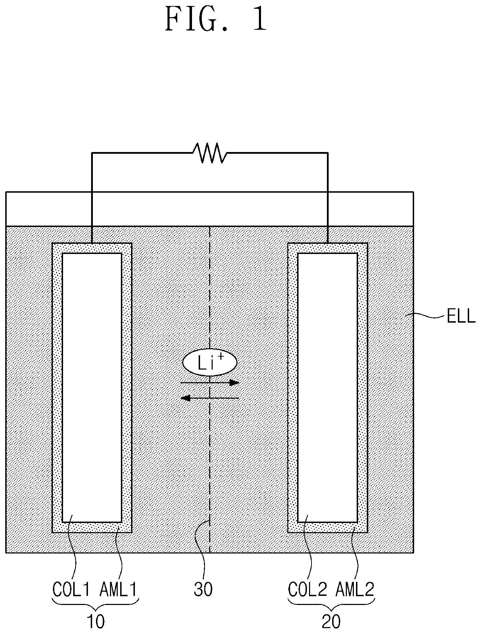

FIG. 1 illustrates a simplified conceptual diagram showing a rechargeable lithium battery according to some embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated with the electrolyte ELL.

The electrolyte ELL may be a medium by which lithium ions are transferred between the positive electrode 10 and the negative electrode 20. In the electrolyte ELL, the lithium ions may move through the separator 30 toward one selected from the positive electrode 10 and the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and further include a binder and/or a conductive material (e.g., an electrically conductive material). The following will describe in more detail the positive electrode active material layer AML1 according to some embodiments of the present disclosure. Aluminium (Al) may be used as the current collector COL1, but the present disclosure is not limited thereto.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include a negative electrode active material of about 90 wt% to about 99 wt%, a binder of about 0.5 wt% to about 5 wt%, and a conductive material (e.g., an electrically conductive material) of about 0 wt% to about 5 wt%.

The binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

If an aqueous binder is used as the negative electrode binder, a cellulose-based compound capable of providing or increasing viscosity may further be included. The cellulose-based compound may include one or more selected from carboxymethyl cellulose, hydroxypropylmethyl cellulose, methyl cellulose, and alkali metal salts thereof. The alkali metal may include Na, K, and/or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity (e.g., electrical conductivity), and any suitable conductive material that does not cause a chemical change of a battery (e.g., an undesirable chemical change of the rechargeable lithium battery) may be used as the conductive material to constitute the battery. For example, the conductive material may include a carbon-based material such as natural graphite, artificial graphite, carbon black, acetylene black, Ketjen black, carbon fiber, carbon nano-fiber, and/or carbon nano-tube; a metal powder and/or metal fiber including one or more selected from copper, nickel, aluminium, and silver; a conductive polymer (e.g., an electrically conductive polymer) such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal (e.g., an electrically conductive metal), or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, and/or a transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, and/or fiber-shaped natural and/or artificial graphite, and the amorphous carbon may include soft carbon, hard carbon, mesophase pitch carbon, and/or calcined coke.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material and/or a Sn-based negative electrode active material. The Si-based negative electrode active material may include silicon, silicon-carbon composite, SiOx (0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon first coating layer (shell) on a surface of the secondary particle. The amorphous carbon may also be between the primary silicon particles, and, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon first coating layer on a surface of the core.

The Si-based negative electrode active material and/or the Sn-based negative electrode active material may be used in combination with a carbon-based negative electrode active material.

### Separator 30

Based on a type (or kind) of the rechargeable lithium battery, the separator 30 may be between positive electrode 10 and the negative electrode 20. The separator 30 may include one or more selected from polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a first coating layer on one or opposite surfaces (e.g., two opposing surfaces) of the porous substrate, which first coating layer includes an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer and/or a (meth)acrylic copolymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, Boehmite, or a combination thereof, but the present disclosure is not limited thereto.

The organic material and the inorganic material may be mixed together in one first coating layer or may be a stack of a first coating layer including the organic material and a first coating layer including an inorganic material.

### Electrolyte ELL

The electrolyte ELL for a rechargeable lithium battery may include a non-aqueous organic solvent and a lithium salt.

The non-aqueous organic solvent may serve as a medium that transmits ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2,5-dimethyltetrahydrofuran, and/or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane and/or 1,4-dioxolane; and/or sulfolanes.

The non-aqueous organic solvent may be used alone or in a mixture of two or more substances.

In embodiments, if a carbonate-based solvent is used, a cyclic carbonate and a chain carbonate may be mixed together and used, and the cyclic carbonate and the chain carbonate may be mixed together in a volume ratio of about 1:1 to about 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB)

### Rechargeable Lithium Battery

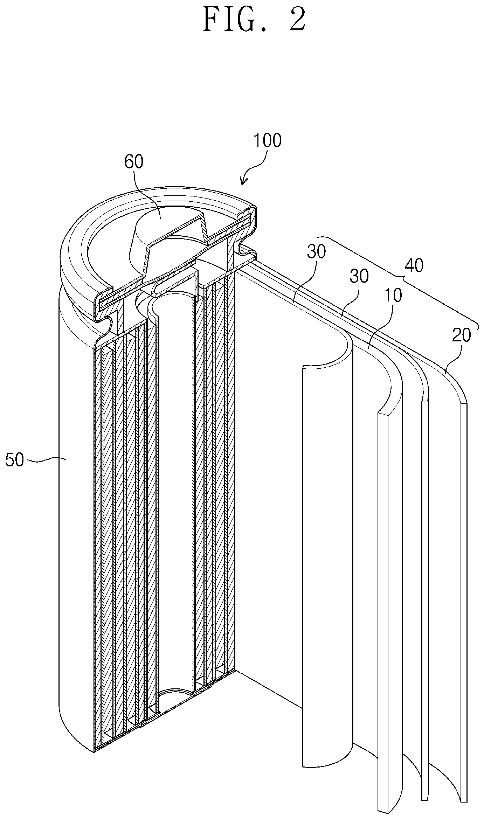

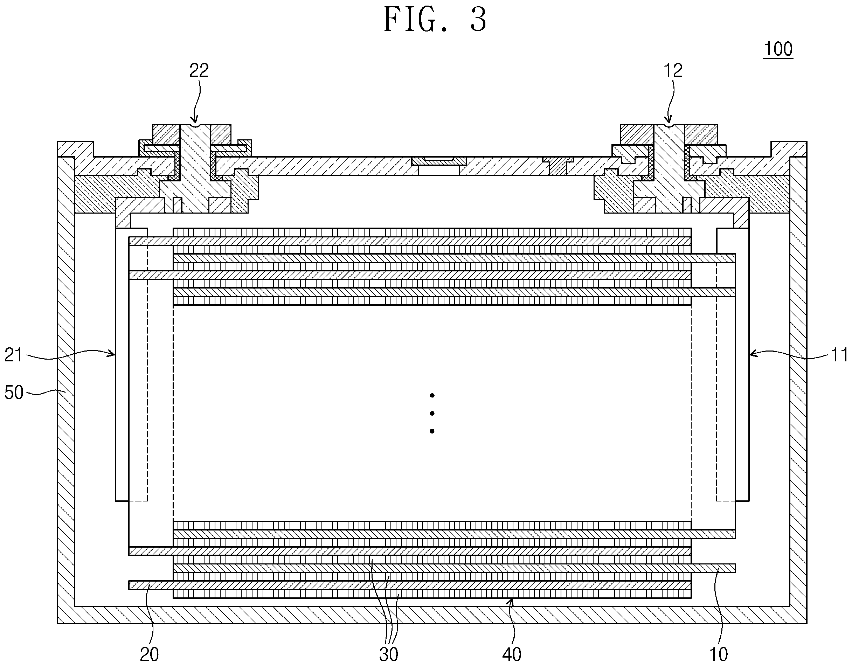

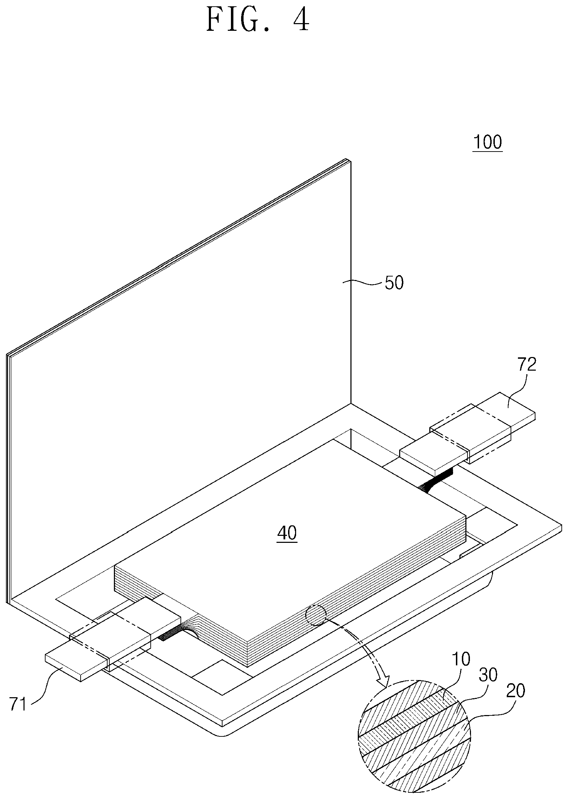

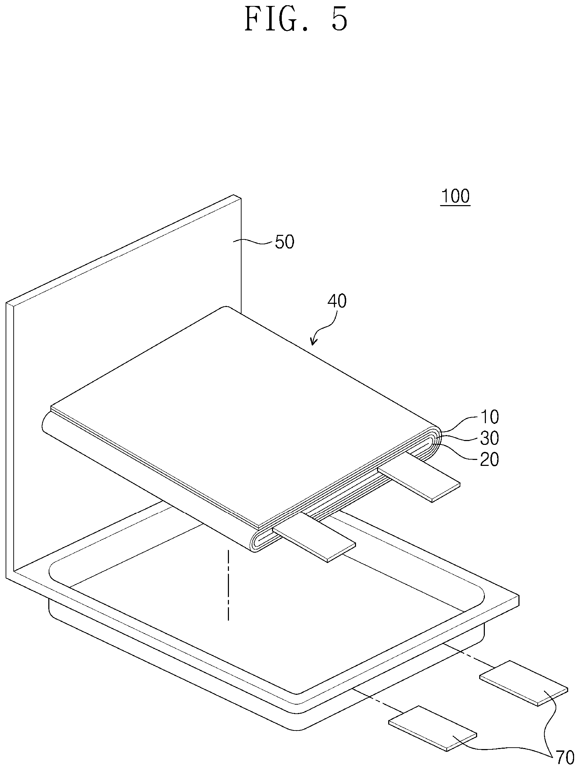

Based on a shape of a rechargeable lithium battery, the rechargeable lithium battery may be classified into cylindrical, prismatic, pouch, and/or coin types (or kinds). In FIGS. 2-5 illustrating simplified diagrams showing rechargeable lithium batteries according to embodiments, FIG. 2 shows a cylindrical battery, FIG. 3 shows a prismatic battery, and FIGS. 4-5 show pouch-type batteries. Referring to FIGS. 2-4, a rechargeable lithium battery 100 may include an electrode assembly 40 in which a separator 30 is between a positive electrode 10 and a negative electrode 20, and may also include a casing 50 in which the electrode assembly 40 is accommodated. The positive electrode 10, the negative electrode 20, and the separator 30 may be impregnated with an electrolyte. The rechargeable lithium battery 100 may include a sealing member 60 that seals the casing 50 as illustrated in FIG. 2. In embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4-5, the rechargeable lithium battery 100 may include an electrode tab 70 (FIG. 5), or a positive electrode tab 71 and a negative electrode tab 72 (FIG. 4), which electrode tab 70 serves as an electrical path for externally inducing a current generated in the electrode assembly 40.

A rechargeable lithium battery according to an embodiment of the present disclosure may be applied to automotive vehicles, mobile phones, and/or any other suitable electrical devices, but the present disclosure is not limited thereto.

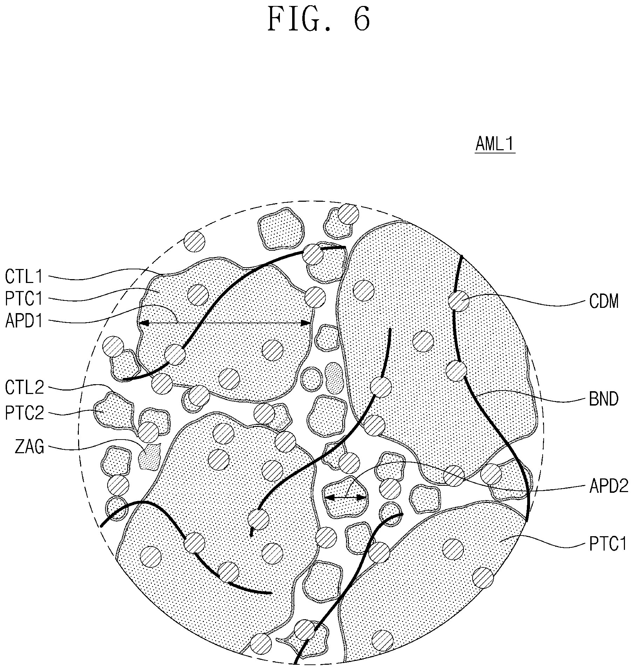

FIG. 6 illustrates an enlarged view showing a positive electrode active material layer of a rechargeable lithium battery according to some embodiments of the present disclosure. Referring to FIG. 6, as discussed above, the positive electrode active material layer (see AML1 of FIG. 1) may include a first particle PTC1, a second particle PTC2, a conductive material CDM (e.g., an electrically conductive material CDM), and a binder BND. A plurality of first particles PTC1 and a plurality of second particles PTC2 may constitute a positive electrode active material according to some embodiments of the present disclosure. In an embodiment, the positive electrode active material layer AML1 may further include a plurality of agglomerates ZAG. In an embodiment, the positive electrode active material layer AML1 may further include an additive that may serve as a sacrificial positive electrode.

An amount of the first particles PTC1 and the second particles PTC2 in the positive electrode active material layer AML1 may range from about 90 wt% to about 99.5 wt% relative to 100 wt% of the positive electrode active material layer AML1. Amounts of the binder BND and the conductive material CDM may be about 0.5 wt% to about 5 wt% relative to 100 wt% of the positive electrode active material layer AML1.

The binder BND may combine to each other the first particle PTC1, the second particle PTC2, and the conductive material CDM. For example, the binder BND may include at least one selected from polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present disclosure is not limited thereto.

The conductive material CDM may be used to improve conductivity (e.g., electrical conductivity) of the positive electrode active material layer AML1. Any conductive material (e.g., any suitable electrically conductive material) that does not cause a chemical change (e.g., that does not cause an undesirable chemical change) of the positive electrode active material layer AML1 may be used without limitation as the conductive material CDM. For example, the conductive material CDM may include a carbon-based material such as natural graphite, artificial graphite, carbon black, acetylene black, Ketjen black, carbon fiber, carbon nano-fiber, and/or carbon nano-tube; a metal powder and/or metal fiber including one or more of copper, nickel, aluminium, and/or silver; a conductive polymer (e.g., an electrically conductive polymer) such as a polyphenylene derivative; or a mixture thereof.

The following will focus on each of the first particle PTC1 and the second particle PTC2.

The first particle PTC1 may have a first average particle diameter APD1, and the second particle PTC2 may have a second average particle diameter APD2. The second average particle diameter APD2 may be less than the first average particle diameter APD1. For example, the first average particle diameter APD1 may range from about 6.0 µm to about 20.0 µm. The second average particle diameter APD2 may range from about 1.0 µm to about 5.0 µm. In embodiments of the present disclosure, the first particle PTC1 may be called a large particle, and the second particle PTC2 may be called a small particle. Each of the first and second particles PTC1 and PTC2 may have a granular shape and/or a spherical shape.

The positive electrode active material according to an embodiment of the present disclosure may have a bimodal shape including large particles (e.g., PTC1) and small particles (e.g., PTC2) having different average particle diameters. The small particles may fill pores between the large particles, and thus the positive electrode active material layer AML1 may have an increased integration density. For example, the positive electrode active material layer AML1 according to some embodiments of the present disclosure may have a relatively high energy density per unit volume.

In an embodiment, the first particle PTC1 and the second particle PTC2 in the positive electrode active material may have a weight ratio of about 95:5 to about 50:50. In another embodiment, the first particle PTC1 and the second particle PTC2 in the positive electrode active material may have a weight ratio of about 5:95 to about 50:50. For example, in the positive electrode active material, a weight of the first particle PTC1 may be greater than that of the second particle PTC2, or a weight of the second particle PTC2 may be greater than that of the first particle PTC1.

In an embodiment, the positive electrode active material may include only the first particles PTC1. For example, the second particle PTC2 may be omitted.

The first particle PTC1 includes a first lithium composite oxide, and the second particle PTC2 may include a second lithium composite oxide. Each of the first and second lithium composite oxides may include nickel (Ni) and zirconium (Zr). Each of the first and second lithium composite oxides may further include at least one metal selected from cobalt (Co), manganese (Mn), and aluminium (Al).

The first lithium composite oxide is represented by Chemical Formula 1 below.

Chemical Formula 1 Liₐ₁Niₓ₁Ma₁₋ₓ₁O_{b1}

In Chemical Formula 1, subscript "a1" ranges from about 0.5 to about 1.5, subscript "x1" ranges from about 0.6 to about 0.99, subscript "b1" ranges from about 1.8 to about 2.2, and subscript "1-x1" ranges from 0.01 to about 0.4. Symbol Ma may include at least one element selected from Co, Al, Mn, Na, Mg, Ca, Y, Ti, Hf, V, Nb, Ta, Cr, Mo, W, Zr, Sr, La, Fe, Cu, Ag, Zn, Ga, C, Si, and Sn. In an embodiment, symbol Ma may include Co, Al, and Mn. In the present disclosure, the term "a transition metal" may include a post-transition metal such as Al.

The first lithium composite oxide may further include boron (B) as a dopant. In an embodiment, the first lithium composite oxide may have a boron (B) concentration of about 1 ppm to about 2,000 ppm. As the amount of boron (B) is infinitesimal (e.g., very small or negligible), no boron may be detected in the first lithium composite oxide (e.g., the boron may be included at an undetectable amount).

The second lithium composite oxide may be represented by Chemical Formula 2 below.

[Chemical Formula 2] Liₐ₂Niₓ₂Mb₁₋ₓ₂Fl_{w2}O_{b2}

In Chemical Formula 2, subscript "a2" may range from about 0.5 to about 1.5, subscript "x2" may range from about 0.6 to about 0.99, subscript "b2" may range from about 1.8 to about 2.2, and subscript "1-x2" may range from 0.01 to about 0.4. Subscript "w2" may range from about 0.0005 to about 0.01. Symbol Mb may include at least one element selected from Co, Al, Mn, Na, Mg, Ca, Y, Ti, Hf, V, Nb, Ta, Cr, Mo, W, Zr, Sr, La, Fe, Cu, Ag, Zn, B, Ga, C, Si, and Sn. In an embodiment, symbol Mb may include Co, Al, and Mn. Symbol Fl may include at least one element selected from Zr, Sr, Y, La, Mo, Ce, Nb, and S. Symbol Fl may be originated from flux used in calcination of the second particle PTC2.

A proportion of Ma in the first lithium composite oxide and elements included in the first lithium composite oxide may be different from that of Mb in the second lithium composite oxide and elements included in the second lithium composite oxide. For example, Ma in the first lithium composite oxide may include Co and Al, and Mb in the second lithium composite oxide may include Co and Mn. For another example, each of Ma and Mb may include Co, Al, and Mn. A composition ratio of Al in Ma may be greater than a composition ratio of Al in Mb, and a composition ratio of Mn in Ma may be less than a composition ratio of Mn in Mb. The first lithium composite oxide may further include boron (B) as a dopant. The second lithium composite oxide may exclude boron (B).

In an embodiment of the present disclosure, the subscript "x1" or a molar ratio of Ni in Chemical Formula 1 may be greater than about 0.8. If the first lithium composite oxide has a composition having a high composition of Ni (x1 > 0.8), the first lithium composite oxide may be calcined at a relatively low temperature. Therefore, the first particle PTC1 may be synthesized at a relatively low temperature in a subsequently described method of fabricating a positive electrode active material for a rechargeable lithium battery. Ni in the first lithium composite oxide may affect power and capacity of a rechargeable lithium battery. In the present disclosure, the first lithium composite oxide having a high nickel composition may be used to provide a high-power rechargeable lithium battery. The subscript "x2" or a molar ratio of Ni in Chemical Formula 2 may also be greater than about 0.8. However, the subscript "x2" may be different from the subscript "x1".

An increase in an amount of Ni in the first and second lithium composite oxides may induce a reduction in stability of a positive electrode or a rechargeable battery. In an embodiment of the present disclosure, the first and second lithium composite oxide may further include Co, and thus a rechargeable battery may improve in stability and capacity retention properties.

In an embodiment of the present disclosure, the first particle PTC1 may have a polycrystalline shape. The first particle PTC1 may include a secondary particle in which at least two primary particles are aggregated.

In an embodiment, the first particle PTC1 may include a first coating layer CTL1 on a surface thereof. The first coating layer CTL1 may cover an entirety or at least a portion of the surface of the first particle PTC1. As the first particle PTC1 is coated with the first coating layer CTL1, structural collapse due to repeated charging and discharging may be effectively suppressed or reduced to improve lifetime properties at room and high temperature.

The first coating layer CTL1 may include a metal-containing compound, for example, a cobalt compound and/or a zirconium compound. The metal-containing compound may include metal oxide, metal hydroxide, metal carbonate, or any combination thereof.

The first coating layer CTL1 may further include a metallic and/or non-metallic element other than cobalt and zirconium. The first coating layer CTL1 may further include lithium, manganese, and/or nickel. For example, the first coating layer CTL1 may include lithium-cobalt-zirconium oxide.

An amount of cobalt may range from about 20 at% to about 50 at% relative to the total amount of transition metals (e.g., Ni+Co+Al+Mn+Zr) in the first coating layer CTL1. An amount of zirconium may range from about 0.001 at% to about 1 at% relative to the total amount of transition metals in the first coating layer CTL1. In embodiments, an amount of zirconium may be equal to or less than about 0.002 at% relative to the total amount of transition metals in the first coating layer CTL1. The amount of cobalt in the first coating layer CTL1 may be greater than that of zirconium in the first coating layer CTL1. A ratio (Co/Zr) of cobalt to zirconium in the first coating layer CTL1 may be equal to or greater than about 10,000.

In an embodiment of the present disclosure, the second particle PTC2 may be shaped like a single particle. The single particle may be composed of one particle that exists alone without a grain boundary therein. The single particle may be one particle, a monolith structure, a single unitary structure (e.g., a sole unitary structure), or a non-aggregated particle, in which particles are not aggregated together with one another but present as an independent phase in terms of morphology. For example, the single particle may be monocrystalline (e.g., a single crystal). As the positive electrode active material according to an embodiment may include the second particle PTC2 in the form of a single particle, it may be possible to achieve high capacity, high energy density, and increased lifetime properties.

In an embodiment, the second particle PTC2 may include a second coating layer CTL2 on a surface thereof. As the second particle PTC2 is coated with the second coating layer CTL2, structural collapse due to repeated charging and discharging may be effectively suppressed or reduced to improve lifetime properties at room and high temperature.

The second coating layer CTL2 may include a metal-containing compound, for example, a cobalt compound and/or a zirconium compound. A description of the second coating layer CTL2 may be the same as or similar to that of the first coating layer CTL1.

An amount of cobalt may range from about 20 at% to about 50 at% relative to the total amount of transition metals in the second coating layer CTL2. An amount of zirconium may range from about 0.002 at% to about 0.2 at% relative to the total amount of transition metals in the second coating layer CTL2. In an embodiment, the amount of cobalt in the second coating layer CTL2 may be less than that of cobalt in the first coating layer CTL1. In an embodiment, the amount of zirconium in the second coating layer CTL2 may be greater than that of zirconium in the first coating layer CTL1.

According to some embodiments of the present disclosure, the second coating layer CTL2 of the second particle PTC2 may have a zirconium amount greater than that of the first coating layer CTL1 of the first particle PTC1. Thus, the second particle PTC2 may increase in ion conductivity on the surface thereof. In the present disclosure, even though the second particle PTC2 is calcined at a relatively high temperature to have a single particle shape, the second coating layer CTL2 having a relatively large amount of zirconium may cause a rechargeable battery to have improved durability and capacity retention properties.

A composition of each of the first and second coating layers CTL1 and CTL2 may be obtained by allowing a particle surface to undergo scanning electron microscopy-energy dispersive X-ray spectroscopy (SEM-EDS) and quantitative analysis. The composition may be measured by inductively coupled plasma mass spectrometry (ICP-MS) and/or inductively coupled plasma optical emission spectroscopy (ICP-OES) besides or in addition to SEM-EDS. In one or more embodiments, a method for determining the composition of the first and second coating layers CTL1 and CTL2 may involve the use of Scanning Electron Microscopy coupled with Energy Dispersive X-ray Spectroscopy (SEM-EDS). For instance, cross-sectional specimens of the positive electrode active material may be prepared using a focused ion beam (FIB), or a suitable mechanical polishing technique to expose the internal structure of the coated particles. The specimens may then be analyzed by SEM to observe the coating layers, and EDS may be performed to measure the elemental composition at specific regions of interest (e.g., the first coating layer or the second coating layer). The EDS mapping or point analysis provides qualitative and quantitative data on the distribution of elements in each coating layer, from which the composition of each coating layer can be determined.

The first and second coating layers CTL1 and CTL2 according to some embodiments of the present disclosure may not be ascertained through an electron microscope image. The first and second coating layers CTL1 and CTL2 may be ascertained through the presence of cobalt and zirconium on a particle surface by using SEM-EDS.

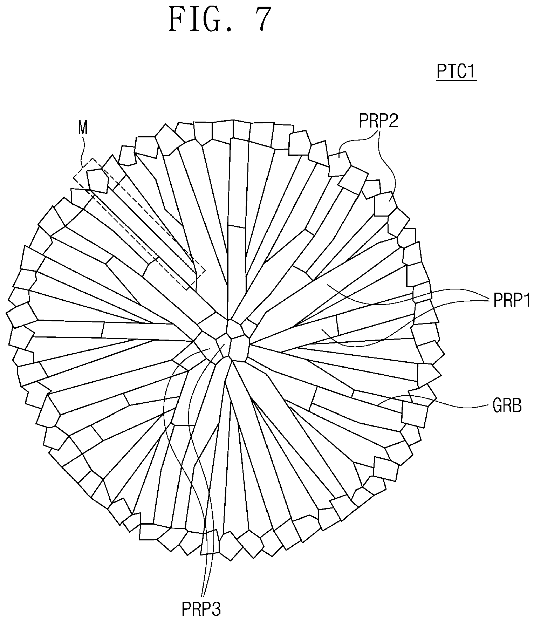

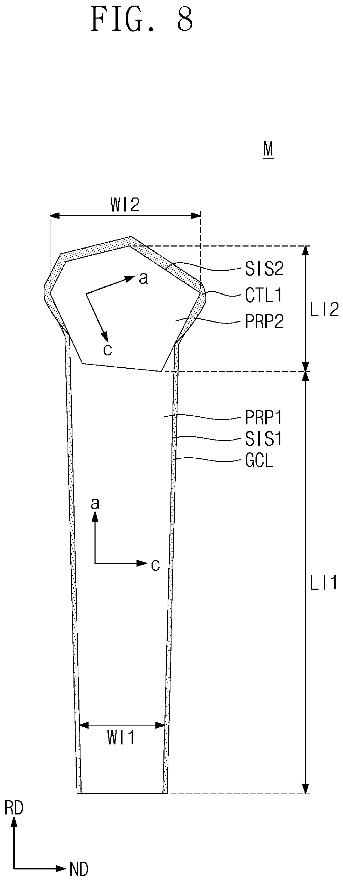

FIG. 7 illustrates an enlarged view showing a cross-section of a first particle according to some embodiments of the present disclosure. FIG. 8 illustrates a simplified enlarged cross-sectional view of section M depicted in FIG. 7, showing a first primary particle and a second primary particle.

Referring to FIGS. 7 and 8, the first particle PTC1 may include a plurality of crystal grains. The first particle PTC1 may include a plurality of primary particles PRP1, PRP2, and PRP3. A third primary particle PRP3 may be on a central portion of the first particle PTC1. A second primary particle PRP2 is on a surface of the first particle PTC1. A first primary particle PRP1 may extend in a radial direction RD from the third primary particle PRP3 toward the second primary particle PRP2.

The crystal grain may be a minimum unit in which lithium composite oxide has a single crystal direction. For example, the primary particles PRP1 to PRP3 included in the first particle PTC1 may each correspond to a respective crystal grain. The second particle PTC2 may be formed of a single crystal grain or a plurality of aggregated crystal grains.

The first primary particle PRP1 may have a rod shape that extends in the radial direction RD. The first primary particle PRP1 may have a major axis substantially parallel to the radial direction RD. Each of the second and third primary particles PRP2 and PRP3 may have an atypical shape whose aspect ratio is small (e.g., an aspect ratio of 1 to 1).

In an embodiment of the present disclosure, the third primary particle PRP3 may be omitted. For example, the first primary particle PRP1 may extend from a center of the first particle PTC1 toward the second primary particle PRP2.

An X-ray diffraction (XRD) analysis may be used to measure an average size of a crystal grain and/or a primary particle of the first particle PTC1. A first size may refer to an average size of the first primary particles PRP1. A second size may refer to an average size of the second primary particles PRP2. A third size may refer to an average size of the third primary particles PRP3. The first size may range from about 200 nm to about 3,000 nm. The second size may range from about 100 nm to about 1,500 nm. The third size may range from about 100 nm to about 900 nm. For example, the first size may be greater than the second size. The first size may be about 1.5 times to about 30 times the second size. In embodiments, the first size may be about 1.5 times to about 10 times the second size. In one or more embodiments, a method for determining the average size of crystal grains or primary particles through X-ray diffraction (XRD) may involve collecting the diffraction pattern of the positive electrode active material using a suitable X-ray source (e.g., Cu Kα radiation). The full width at half-maximum (FWHM) of one or more characteristic diffraction peaks (e.g., the (003) and (104) peaks in the case of layered oxide materials) may then be obtained. The FWHM may be corrected for instrumental broadening using a standard reference material with a known crystallite size. If the primary particles are significantly larger than the crystal grains, additional calibration or corroboration through other methods (such as SEM or TEM) may be performed to more accurately distinguish between crystallite size and the overall particle size. In some embodiments, multiple diffraction peaks may be analyzed to obtain an average crystallite size, which can then be compared to results from other characterization techniques for consistency.

According to an embodiment of the present disclosure, the first primary particle PRP1 may have a first length Ll1 in the radial direction RD. The first length Ll1 may correspond to the first size. For example, the first length Ll1 may range from about 400 nm to about 3,000 nm.

The first primary particle PRP1 may have a first width WI1 in a direction ND that intersects the radial direction RD. For example, the first width WI1 may range from about 200 nm to about 600 nm. The first width WI1 of the first primary particle PRP1 may gradually increase in the radial direction RD. For example, the first width WI1 of the first primary particle PRP1 adjacent to the second primary particle PRP2 may be greater than the first width WI1 of the first primary particle PRP1 adjacent to the third primary particle PRP3.

The first primary particle PRP1 may have a relatively large aspect ratio (Ll1/Wl1). For example, the aspect ratio (Ll1/Wl1) of the first primary particle PRP1 may range from about 2 to about 15. For example, the aspect ratio (Ll1/Wl1) of the first primary particle PRP1 may range from about 5 to about 10. The aspect ratio may refer to the average aspect ratio and may be determined from SEM images. For example, SEM images of the positive electrode active material are first obtained. These images may then then be analyzed using an image analysis program (e.g., ImageJ). From each SEM image, approximately 100 primary particles may be randomly selected, and for each particle, the longest distance (major axis) and the shortest distance (minor axis) may be measured. The aspect ratio for each particle may be calculated by dividing the major axis by the minor axis. The arithmetic mean of these individual aspect ratios may then be computed to obtain the average aspect ratio.

The first length Ll1 of the first primary particle PRP1 adjacent to the second primary particle PRP2 may be greater than the first length Ll1 of the first primary particle PRP1 adjacent to the third primary particle PRP3. The first primary particle PRP1 adjacent to the center of the first particle PTC1 among a plurality of first primary particles PRP1 may have a length less than that of the first primary particle PRP1 adjacent to the surface of the first particle PTC1 among a plurality of first primary particles PRP1.

According to an embodiment of the present disclosure, the second primary particle PRP2 may have a second length Ll2 in the radial direction RD. The second primary particle PRP2 may have a second width WI2 in the direction ND that intersects the radial direction RD. The second primary particle PRP2 may have a relatively small aspect ratio (Ll2/Wl2). The aspect ratio (Ll2/Wl2) of the second primary particle PRP2 may range from about 0.7 to about 3. For example, the aspect ratio (Ll2/Wl2) of the second primary particle PRP2 may range from about 1 to about 3. Each of the second length Ll2 and the second width WI2 may correspond to the second size. For example, each of the second length Ll2 and the second width WI2 may range from about 100 nm to about 1,500 nm.

According to some embodiments of the present disclosure, the first particle PTC1 may include boron (B) as a dopant. Thus, as shown in FIG. 8, the first primary particle PRP1 may have an increased aspect ratio. As discussed below, a method of fabricating the first particle PTC1 may include a first calcination process, a first coating process, a second coating process, and a second calcination process. Thus, the second primary particles PRP2 may be provided on the surface of the first particle PTC1. The first primary particle PRP1 may be provided at its end with the second primary particle PRP2 whose aspect ratio is small (e.g., the second primary particle PRP2 may be at an end of the first primary particle PRP1 and the aspect ratio of the second primary particle PRP2 is small). It may thus be easy to intercalate and deintercalate lithium ions into and from, respectively, the first particle PTC1.

The first primary particle PRP1 may have a first lateral surface SIS1. The first lateral surface SIS1 may be parallel (or substantially parallel) to the radial direction RD. For example, the first lateral surface SIS1 may include a (003) plane.

As the first particle PTC1 may include boron (B) as a dopant, the first lateral surface SIS1 of the first primary particle PRP1 may have an increased area (e.g., an increased surface area). However, the first primary particle PRP1 may have a (014) plane and a (104) plane each having a relatively reduced area (e.g., a relatively reduced surface area).

A crystal structure of the first primary particle PRP1 may have an a-axis arranged substantially parallel to the radial direction RD. As the (003) plane or the first lateral surface SIS1 of the first primary particle PRP1 has an increased area (e.g., an increased surface area), the first primary particle PRP1 may have an increased aspect ratio (Ll1/Wl1) and improved orientation. For example, an angle between the radial direction RD and the a-axis of the first primary particle PRP1 may range from about 0° to about 5°. A crystal structure of the first primary particle PRP1 may have a c-axis perpendicular (or substantially perpendicular) to the radial direction RD. For example, an angle between the radial direction RD and the c-axis of the first primary particle PRP1 may range from about 80° to about 100°. A representative method for determining the angle between the radial direction and the a-axis may proceed as follows. First, cross-sectional HR-TEM images of the primary particles may be obtained. The radial direction may be defined as the line from the approximate center of the particle to its outer boundary. The a-axis may then be identified by analyzing the lattice fringes visible in the HR-TEM images, or by performing selected area electron diffraction (SAED) to index the crystal direction. Next, the angle between the radial direction and the a-axis may be measured for each primary particle. The process may be repeated, for example, for at least 50 or 100 primary particles to ensure a statistically meaningful sample size, and an average of these individual angles may then be calculated to determine the overall representative angle.

As shown in FIG. 7, a grain boundary GRB may be provided between the first primary particles PRP1 that are adjacent to each other. The grain boundary GRB may be substantially parallel to the radial direction RD. An electrolyte and metal ions (e.g., lithium ions) may suitably or satisfactorily move through the grain boundary GRB. In embodiments, a rechargeable battery including the first particle PTC1 may improve in efficiency of charging and discharging.

The second primary particle PRP2 may have a relatively small aspect ratio (Ll2/Wl2) and low orientation (e.g., is not as oriented as the first primary particle PRP1). A crystal structure of the second primary particle PRP2 may have an a-axis that is not parallel but intersects the radial direction RD. For example, an angle between the radial direction RD and the a-axis of the second primary particle PRP2 may range from about 10° to about 80°. The a-axis of the second primary particle PRP2 may have a random direction.

During a procedure of charging and discharging, the second primary particle PRP2 may shrink and expand in a c-axis direction. The second primary particle PRP2 may randomly shrink and expand. According to embodiments of the present embodiment, the second primary particle PRP2 may be selectively provided on the surface of the first particle PTC1. Thus, even though the second primary particle PRP2 randomly shrinks and expands, no (or substantially no) cracks may occur in the first particle PTC1. The random shrinkage and expansion of the second primary particle PRP2 may ensure that the grain boundary GRB is exposed to a suitable appropriate level at the surface of the second primary particle PRP2. Thus, the movement of lithium ions and an electrolyte through the grain boundary GRB may be suitably or appropriately controlled during a procedure of charging and discharging.

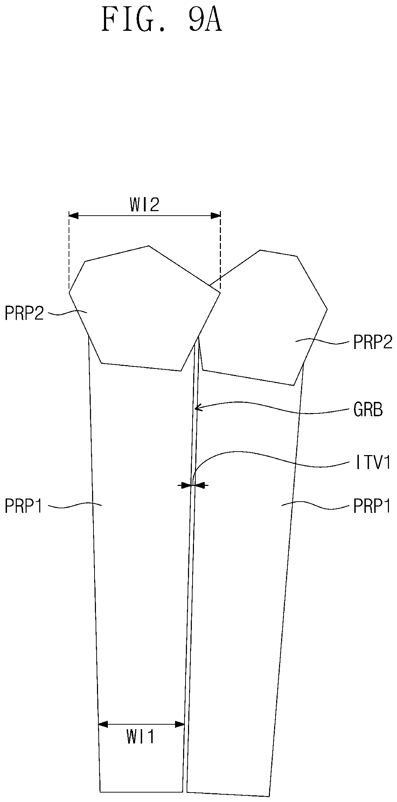

For example, referring to FIG. 9A, the grain boundary GRB may be provided between the first primary particles PRP1 that are adjacent to each other. A first interval ITV1 may be given to the grain boundary GRB of the first particle PTC1 into which lithium ions are intercalated.

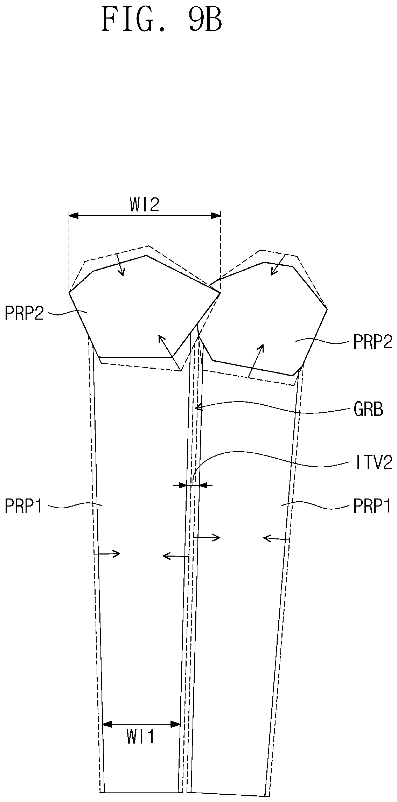

Referring to FIG. 9B, if a rechargeable battery is charged, lithium ions may be deintercalated from the first particle PTC1 to shrink the first and second primary particles PRP1 and PRP2. A primary particle may shrink in a c-axis direction. As the first primary particles PRP1 have substantially the same orientation, the first primary particles PRP1 may shrink to have their reduced width Wl1. The shrinkage of the first primary particles PRP1 may cause the grain boundary GRB to have an increased second interval ITV2.

As the second primary particle PRP2 has random orientation, the second width WI2 of the second primary particle PRP2 may not be significantly changed compared with the first width WI1 even if the second primary particle PRP2 shrinks. For example, if the first particle PTC1 shrinks, a change in an amount of the second width WI2 of the second primary particle PRP2 may be less than a change in an amount of the first width WI1 of the first primary particle PRP1.

Thus, even if the relatively large second interval ITV2 occurs at the grain boundary GRB, the second primary particles PRP2 may suitably or properly close or protect the grain boundary GRB that is spaced at the second interval ITV2. Accordingly, excessive penetration of an electrolyte into the grain boundary GRB may be prevented or reduced, and occurrence of side reactions and cracks within the first particle PTC1 may be prevented or reduced.

In a procedure of charging and discharging of a rechargeable lithium battery, intercalation and deintercalation of lithium ions may cause a primary particle to shrink and expand in a c-axis direction. The shrinkage and expansion of the primary particle may create cracks within a secondary particle. The cracks may induce introduction of an electrolyte into the secondary particle. A side reaction of the electrolyte introduced through the cracks may generate an impurity phase within the secondary particle.

According to some embodiments of the present disclosure, the a-axis of the first primary particle PRP1 may be parallel (or substantially parallel) to the radial direction RD, and the c-axis of the first primary particle PRP1 may be parallel (or substantially parallel) to the direction ND that intersects the radial direction RD. Thus, even if the first primary particle PRP1 shrinks and expands in the direction ND, occurrence of internal cracks in the first particle PTC1 may be prevented or reduced. In embodiments, the second primary particle PRP2 which is randomly oriented may be selectively provided only on the surface of the first particle PTC1. Thus, even though the second primary particle PRP2 shrinks and expands, the occurrence of internal cracks in the first particle PTC1 may be prevented or reduced. In embodiments, a positive electrode active material according to some embodiments of the present disclosure may improve a charge-discharge capacity and lifetime properties of a rechargeable lithium battery.

A grain boundary coating layer GCL (FIG. 8) may be provided on the first lateral surface SIS1 of the first primary particle PRP1. For example, the grain boundary coating layer GCL may be provided on the grain boundary GRB. A first coating layer CTL1 (FIG. 8) may be provided on the second lateral surface SIS2 of the second primary particle PRP2. The first coating layer CTL1 may be substantially the same as that discussed above.

The grain boundary coating layer GCL may be present not on the surface of the first particle PTC1 but in an interior of the first particle PTC1. The grain boundary coating layer GCL may be coated along the grain boundary GRB in the interior of the first particle PTC1. In this description, the interior of the first particle PTC1 may indicate an entire inner portion except for the surface of the first particle PTC1. For example, the interior of the first particle PTC1 may mean an entire inside from an outer surface of the first particle PTC1 to a depth of about 10 nm, or a portion from a depth of about 10 nm to a depth of about 2 µm.

The first particle PTC1 according to the present embodiment may further include the grain boundary coating layer GCL in addition to the first coating layer CTL1, and thus it may be possible to improve structural stability and to induce an even and uniform (e.g., substantially even and substantially uniform) coating on surfaces. An amount of metal in the first coating layer CTL1 may be suitably adjusted to increase lifetime properties and initial charge-discharge efficiency without an increase in resistance (e.g., electrical resistance).

The grain boundary coating layer GCL may include a metal-containing compound, for example, a cobalt compound and/or a zirconium compound. The metal-containing compound may include metal oxide, metal hydroxide, metal carbonate, or any combination thereof.

The grain boundary coating layer GCL may further include a non-metal element and/or metal other than cobalt and zirconium. The grain boundary coating layer GCL may further include lithium, manganese, and/or nickel. For example, the grain boundary coating layer GCL may include lithium-cobalt-zirconium oxide.

An amount of cobalt may range from about 20 at% to about 50 at% relative to the total amount of transition metals in the grain boundary coating layer GCL. An amount of zirconium may be equal to or less than about 0.1 at% relative to the total amount of transition metals in the grain boundary coating layer GCL. In an embodiment, as the grain boundary coating layer GCL has an infinitesimal (e.g., very small or negligible) amount of zirconium, no zirconium may be detected (e.g., the zirconium may be included at an undetectable amount).

An amount of cobalt in the grain boundary coating layer GCL may be different from an amount of cobalt in the first coating layer CTL1. In an embodiment, an amount of cobalt in the grain boundary coating layer GCL may be greater than an amount of cobalt in the first coating layer CTL1. An amount of zirconium in the grain boundary coating layer GCL may be less than an amount of zirconium in the first coating layer CTL1. A ratio (Co/Zr) of cobalt to zirconium in the grain boundary coating layer GCL may be greater than a ratio (Co/Zr) of cobalt to zirconium in the first coating layer CTL1.

A core of the first particle PTC1 may have a porosity greater than that of a shell of the first particle PTC1. The core of the first particle PTC1 may be defined to indicate a region from a center of the first particle PTC1 to half a radius of the first particle PTC1. The shell of the first particle PTC1 may be defined to indicate a remaining region that surrounds the core.

A ratio of porosity of the core to an average porosity of the first particle PTC1 may range from about 1.5 to about 2.0. The core of the first particle PTC1 may be porous, and the shell of the first particle PTC1 may be dense (e.g., non-porous or relatively non-porous). The shell of the first particle PTC1 may include the first coating layer CTL1 and the grain boundary coating layer GCL, and may also include the second primary particles PRP2 discussed above with reference to FIGS. 9A-9B. Therefore, the shell of the first particle PTC1 may have a dense structure without voids (or substantially without voids).

The shell of the first particle PTC1 may include nickel (Ni) and cobalt (Co). A ratio (Ni/(Ni+Co)) of an amount of nickel (Ni) to the total amount of nickel (Ni) and cobalt (Co) in the shell may range from about 70 at% to about 90 at%. The shell of the first particle PTC1 according to the present embodiment may have the aforementioned amounts of nickel (Ni) and cobalt (Co), thereby having a low porosity and being dense (e.g., may have a relatively lower porosity than the core and may be relatively denser than the core). An amount of Ni in the shell of the first particle PTC1 may be less than an amount of Ni in the core of the first particle PTC1. An amount of Co in the shell of the first particle PTC1 may be greater than an amount of Co in the core of the first particle PTC1.

Referring back to FIG. 6, the second particle PTC2 may include at least one crystal grain. An XRD analysis may be employed to measure an average size of the crystal grain (e.g., the first to third primary particles PRP1 to PRP3) of the first particle PTC1 and an average size of the crystal grain of the second particle PTC2. For example, the grain of the second particle PTC2 may have an average size of about 100 nm to about 4,000 nm or about 500 nm to about 1,500 nm. The average size of the crystal grain of the first particle PTC1 may be less than the average size of the crystal grain of the second particle PTC2. The average size of the crystal grain of the second particle PTC2 may be about 1.1 times to about 3.5 times the average size of the crystal grain of the first particle PTC1.

According to an embodiment of the present disclosure, the second particle PTC2 may be formed by calcination using flux. Thus, the crystal grain of the second particle PTC2 may be formed to have a relatively large size. The second particle PTC2 may have relatively high durability and formation of micro-cracks in the second particle PTC2 may be prevented or reduced.

The agglomerate ZAG may be provided in a space between the first and second particles PTC1 and PTC2. The agglomerate ZAG may be originated from a coating agent which will be further discussed below. The agglomerate ZAG may include a metal-containing compound, for example, a cobalt compound and/or a zirconium compound. For example, the agglomerate ZAG may be a cluster formed by agglomeration of a portion of a coating agent that is not coated on the surfaces of the first and second particles PTC1 and PTC2.

The first particle PTC1 may have a secondary particle shape. A micro-crack may be easily formed in a secondary particle of other active materials if a battery is discharged and discharged. In embodiments of the present disclosure, however, in the first particle PTC1 according to some embodiments of the present disclosure, formation of internal cracks may be prevented or reduced due to the orientation and arrangement of primary particles as shown in FIGS. 7-8. According to some embodiments of the present disclosure, the second particle PTC2 may be shaped like (or may be) a single particle. The second particle PTC2 may be denser and more durable than the first particle PTC1. Thus, the occurrence of micro-cracks in the second particle PTC2 may be prevented or reduced. As a result, it may be possible to improve stability and capacity retention properties of a rechargeable battery according to embodiments of the present disclosure.

As the second particle PTC2 has an average particle diameter less than that of the first particle PTC1, the second particle PTC2 may have a specific surface area greater than that of the first particle PTC1. If the first and second particles PTC1 and PTC2 are applied to the positive electrode 10 of FIG. 1, compared to the first particle PTC1, the second particle PTC2 may be more in contact with the electrolyte ELL (e.g., the second particle PTC2 may have more surface area in contact with the electrolyte ELL than the first particle PTC1 does). Thus, compared to the first particle PTC1, the second particle PTC2 may easily undergo a side reaction with the electrolyte ELL. According to some embodiments of the present disclosure, the second particle PTC2 may include a second coating layer CTL2 including cobalt (Co) and/or zirconium (Zr). The second coating layer CTL2 may prevent or reduce a side reaction between the second particle PTC2 and the electrolyte ELL. For example, the second coating layer CTL2 of the present disclosure may prevent or reduce degradation of the second particle PTC2 due to the electrolyte ELL.

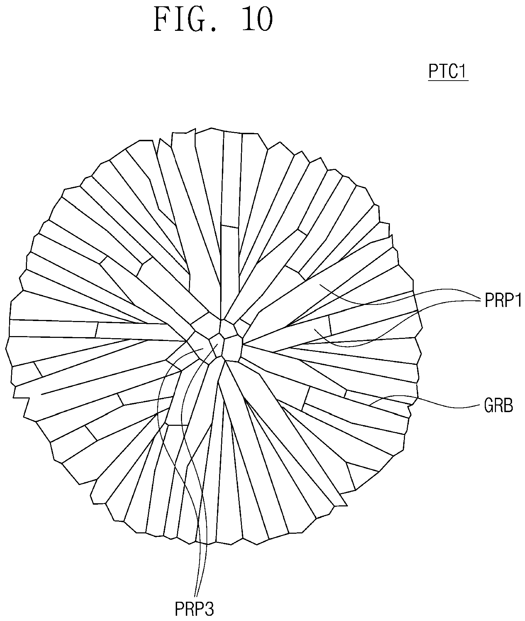

FIG. 10 illustrates an enlarged view showing a cross-section of a first particle according to a comparative example of the present disclosure. Referring to FIG. 10, a first particle PTC1 according to the comparative example may exclude the second primary particle PRP2 on a surface thereof. For example, the second primary particles PRP2 may be omitted which are on the surface (or shell) of the first particle PTC1. The first primary particle PRP1 that extends in a radial direction may have one exposed end. The one end of the first primary particle PRP1 may constitute the surface of the first particle PTC1.

For example, a method of fabricating the first particle PTC1 according to the comparative example may omit a first coating process, a second coating process, and a second calcination process which will be further discussed below. The omission of the first coating process, the second coating process, and the second calcination process may not form the second primary particles PRP2 on the surface of the first particle PTC1.

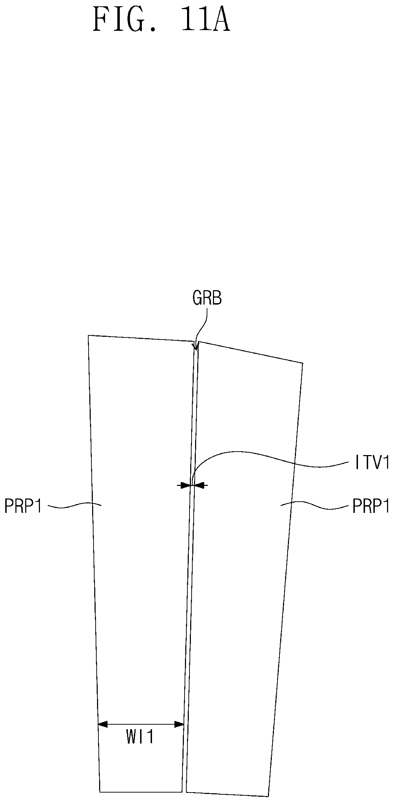

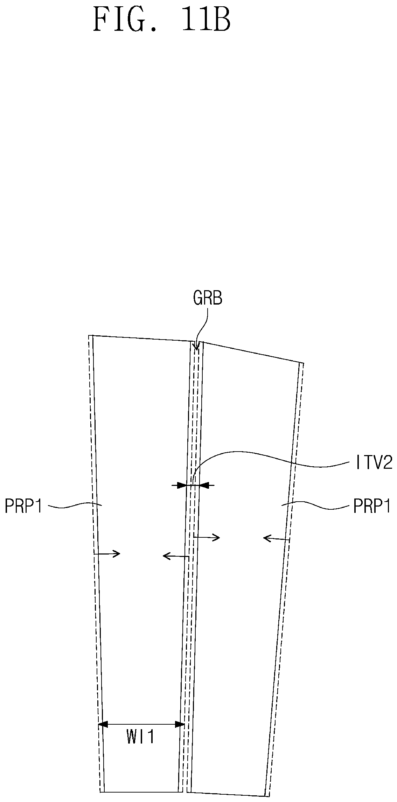

FIG. 11A illustrates a simplified cross-sectional view showing a first primary particle into which lithium ions are intercalated in a first particle according to a comparative example. FIG. 11B illustrates a simplified cross-sectional view showing a first primary particle from which lithium ions are deintercalated in a first particle according to a comparative example.

Referring to FIG. 11A, a grain boundary GRB may be between the first primary particles PRP1 that are adjacent to each other. A first interval ITV1 may be given to the grain boundary GRB of the first particle PTC1 into which lithium ions are intercalated. For example, the grain boundary GRB may be exposed through the surface of the first particle PTC1.

Referring to FIG. 11B, if a rechargeable battery is charged, lithium ions may be deintercalated from the first particle PTC1 to shrink the first primary particles PRP1. The shrinkage of the first primary particles PRP1 may cause the grain boundary GRB to have an increased second interval ITV2.

The grain boundary GRB outwardly exposed if lithium ions are deintercalated may become large in size. The increased grain boundary GRB may allow an electrolyte to easily penetrate into the first particle PTC1. Thus, there may occur problems of the occurrence of a crack and a side reaction in the first particle PTC1.

In embodiments of the present disclosure, however, in the first particle PTC1 according to some embodiments of the present disclosure, as discussed above with reference to FIGS. 9A-9B, even if lithium ions are deintercalated though the second primary particles PRP2 on the surface of the first particle PTC1, excessive exposure of the grain boundary GRB may be prevented or reduced. Embodiments of the present disclosure may prevent or reduce the occurrence of a crack and an impurity phase in the first particle PTC1.

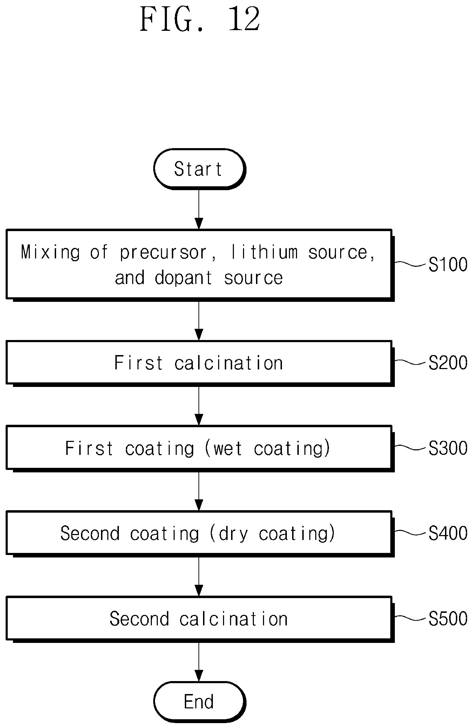

FIG. 12 illustrates a flow chart showing a method of fabricating a first particle according to some embodiments of the present disclosure. Referring to FIG. 12, a precursor of a first particle may be prepared. The precursor includes Ni and Ma in Chemical Formula 1 discussed above. Ma includes at least one element selected from Co, Al, Mn, Na, Mg, Ca, Y, Ti, Hf, V, Nb, Ta, Cr, Mo, W, Zr, Sr, La, Fe, Cu, Ag, Zn, B, Ga, C, Si, and Sn. For example, Ma may include Co and Al.

In an embodiment, the precursor may be obtained through a coprecipitation method. For example, the coprecipitation method may include dissolving a raw material of a transition metal in a solvent such as distilled water, and continuously (or substantially continuously) providing a reactor with a transition metal salt solution along with a chelating agent and an alkaline aqueous solution. A precipitate may be collected in the form of slurry, and then a slurry solution may be filtered and dried to obtain a metal composite hydroxide and/or oxide, and/or the precursor.

In the present disclosure, the raw material of a transition metal may include a metal salt of at least one element selected from Ni, Co, Al, Mn, Na, Mg, Ca, Y, Ti, Hf, V, Nb, Ta, Cr, Mo, W, Zr, Sr, La, Fe, Cu, Ag, Zn, B, Ga, C, Si, and Sn. The metal salt may include sulfate, nitrate, acetate, halide, and/or hydroxide, and there is no particular limitation as long as a material can be dissolved in a solvent. The raw material of the transition metal according to some embodiments may include nickel salt, cobalt salt, and aluminium salt. The raw material of the transition metal may be mixed by adjusting a molar ratio to allow a positive electrode active material to have high capacity properties. For example, the molar ratio may determine the subscript "x1" of Chemical Formula 1.

The precursor, a lithium source, and a dopant source may be mixed together at a certain ratio to form a mixture (S100). For example, the precursor and the lithium source may be mixed together at a molar ratio of about 1:1. The lithium source may be used without particular limitation as long as it is a suitable one generally used in fabrication of positive electrode active materials. For example, the lithium source may include lithium salt, such as lithium carbonate, lithium nitrate, lithium hydroxide, and/or lithium sulfate.

The dopant source may include boron (B) of Chemical Formula 1 discussed above. The dopant source may be mixed together at a molar ratio of about 0.0003 to about 0.2 with respect to the precursor. For example, the dopant source may include boron oxide and/or boric acid.

The mixture may be added to a furnace and a first calcination process may be performed at a first temperature (S200). The first temperature may range from about 500 °C to about 1,000 °C. For example, the first temperature may range from about 700 °C to about 900 °C. The first calcination process may be performed in an oxidation atmosphere such as air and/or oxygen. A heat treatment time of the first calcination process may range from about 5 hours to about 30 hours. In another embodiment of the present disclosure, before the first calcination process, a preliminary calcination process may be additionally performed at a temperature of about 150 °C to about 800 °C.

The first calcination process may form a first particle PTC1 from the mixture including the precursor, the lithium source, and the dopant source. The dopant source and the first calcination process may be controlled to allow the first particle PTC1 to have a secondary particle shape as shown in FIG. 7. In an embodiment, a grinding process may be performed on the synthesized first particle PTC1. The ground first particle PTC1 may have the first average particle diameter APD1 discussed in FIG. 6.

A first coating process may be performed on the first particle PTC1 (S300). In an embodiment, the first coating process may be a wet coating process. The first coating process may include coating the first particle PTC1 with cobalt (Co).

For example, the first particle PTC1 may be mixed together with a first coating raw material. The first particle PTC1 and the first coating raw material may be added to and mixed together in a solvent (e.g., distilled water). The first coating raw material may be a cobalt compound. For example, the cobalt compound may include cobalt oxide, but the present disclosure is not limited thereto. The first particle PTC1 and the first coating raw material may be mixed together with an agitator. The first particle PTC1 may be filtered and dried.

The first coating process may form a first coating layer CTL1 on a surface of the first particle PTC1 and may also form a grain boundary coating layer GCL in an interior of the first particle PTC1. For example, the wet coating process may be used to suitably or satisfactorily form the grain boundary coating layer GCL.

A second coating process may be performed on the dried first particle PTC1 (S400). In an embodiment, the second coating process may be a dry coating process. The second coating process may include coating the first particle PTC1 with zirconium (Zr).

For example, the first particle PTC1 and a second coating raw material may be mixed together without a solvent. The first particle PTC1 and the second coating raw material may be added to a dry coating machine and then agitated and mixed together. The second coating raw material may be a zirconium compound. The zirconium compound may include zirconia, but the present disclosure is not especially limited thereto.

The first particle PTC1 that has experienced the second coating process may be added to a furnace, and a second calcination process may be performed at a second temperature (S500). The second temperature may range from about 150 °C to about 800 °C. The second temperature may be less than the first temperature of the first calcination process. The second calcination process may be performed in an oxidation atmosphere such as air and/or oxygen.

The second calcination process may form a first coating layer CTL1 from the cobalt compound and the zirconium compound that are provided on the first particle PTC1. A grain boundary coating layer GCL may be formed from the cobalt compound provided to the grain boundary GRB in the interior of the first particle PTC1.

An amount of cobalt in the first coating layer CTL1 may be less than an amount of cobalt in the grain boundary coating layer GCL. An amount of zirconium in the first coating layer CTL1 may be greater than an amount of zirconium in the grain boundary coating layer GCL. This may be caused by the fact that, because the second coating process is performed as a dry process, it is difficult to provide the zirconium compound to the grain boundary GRB in the interior of the first particle PTC1.

The second particle PTC2 may be formed by a method similar to that used for forming the first particle PTC1. A precursor of the second particle PTC2 may be formed to have a particle diameter less than that of the precursor of the first particle PTC1. In embodiments, a first calcination process for the first calcination process may exclude the dopant source, and flux may be used instead of the dopant source.

The first particle PTC1 and the second particle PTC2 may be mixed together with each other to manufacture a positive electrode active material according to some embodiments of the present disclosure. In an embodiment, the first particle PTC1 and the second particle PTC2 may be mixed together in a weight ratio of about 95:5 to about 50:50. The first particle PTC1 and the second particle PTC2 may be mixed together in a weight ratio of about 5:95 to about 50:50. As the first particle PTC1 is mixed together with the second particle PTC2 whose average particle diameter is different from that of the first particle PTC1, there may be prepared a positive electrode active material having a bimodal shape. In embodiments, the second particle PTC2 may be omitted.

A positive electrode active material layer AML1 may be fabricated by an ordinary fabrication method, except for the use of a positive electrode active material according to some embodiments of the present disclosure. For example, the first particle PTC1 and the second particle PTC2, a binder BND, and a conductive material CDM (e.g., an electrically conductive material CDM) of the present disclosure may be dissolved and/or dispersed in a solvent, thereby manufacturing a mixture. The binder BND and the conductive material CDM may be the same as those discussed above in the positive electrode active material layer AML1 of FIG. 6. The mixture may be coated on a current collector COL1, and then may be dried and pressed to manufacture a positive electrode 10.

The solvent may be any suitable one generally used in the art, for example, may include at least one selected from dimethyl sulfoxide (DMSO), isopropyl alcohol, N-methyl pyrrolidone (NMP), acetone, water, and any combination thereof.

In embodiments, the mixture may be casted on a certain supporter to manufacture a film or the positive electrode active material layer AML1. The positive electrode 10 may be manufactured by laminating the positive electrode active material layer AML1 on the current collector COL1.

Herein, the subject matter of the present disclosure will be described in more detail with reference to some embodiments. The following embodiments are provided for illustrative purposes only and are not to be construed to limit the scope of the present disclosure.

### Embodiment 1: Fabrication of Positive Electrode Active Material

### Preparation 1: Fabrication of Large-Particle Precursor

A coprecipitation method was used to manufacture a large-particle precursor. A subsequently described procedure was employed to manufacture nickel-based metal hydroxide (Ni_{0.90}Co_{0.07}Al_{0.03}(OH)₂) as the large-particle precursor.

Nickel sulfate (NiO₄·6H₂O), cobalt sulfate (CoSO₄·7H₂O), and aluminium sulfate (Al₂(SO₄)₃·H₂O) in a molar ratio of 90:7:3 as a raw material of nickel-based metal hydroxide were dissolved in distilled water as a solvent to prepare a metal raw material mixture solution. An ammonia water (NH₄OH) dilute solution and sodium hydroxide (NaOH) as a precipitant were prepared to form a complex compound. Afterwards, the metal raw material mixture solution, the ammonia water, and the sodium hydroxide were added into a reactor. Sodium hydroxide was added into the reactor to maintain a pH of the mixture in the reactor. A reaction was performed for about 20 hours while the mixture was agitated in the reactor.

A slurry solution in the reactor was filtered and washed with high-purity distilled water. The washed material was dried in a hot-air oven at 190 °C for 24 hours to obtain a powder of the large-particle precursor (Ni_{0.90}Co_{0.07}Al_{0.03}(OH)₂) whose particle size is about 18 µm.

### Preparation 2: Fabrication of Large-Particle Lithium Composite Oxide

The large-particle precursor of Preparation 1, anhydrous lithium hydroxide (LiOH), and boric acid (H₃BO₃) were dry-mixed together with a Henschel Mixer. Lithium, a transition metal, and boron were mixed together in a molar ratio of about 1:1:0.01. The transition metal refers to a total sum (Ni+Co+Al) of transition metals included in the large-particle precursor. The mixture was thermally heated (or a first calcination process) in an oxygen atmosphere at about 800 °C for 10 hours to synthesize a first particle or first lithium composite oxide. The first particle was ground with a Jet Mill under a pressure of 3 bars.

Cobalt oxide, which corresponds to 3 mol% relative to the total sum of transition metals in the first particle, was added to perform a wet coating process (a first coating process). The first particle coated with cobalt was dried at 150 °C for 12 hours. After the first particle was dried, zirconium oxide, which corresponds to 0.1 mol% relative to the total sum of transition metals in the first particle, was added to perform a dry coating process (a second coating process). The first particle coated with zirconium was thermally treated at about 700 °C for 15 hours in an oxygen atmosphere (a second calcination process).

### Embodiment 2: Fabrication of Rechargeable Lithium Battery

96 grams of the positive electrode active material of Preparation 1, 2 grams of polyvinylidene fluoride, 47 grams of N-methyl pyrrolidone as a solvent, and 2 grams of carbon black as a conductive material (e.g., an electrically conductive material) were mixed together to manufacture an active material slurry.

The active material slurry was coated on an aluminium film using a doctor blade to form a thin electrode plate. The electrode plate was dried at 135 °C for 3 hours or more, and then compressed and vacuum dried to form a positive electrode.

The positive electrode and a lithium metal counter electrode were used to manufacture a 2032-type coin cell. A separator (having a thickness of about 16 µm) formed of a porous polyethylene (PE) film was interposed between the positive electrode and the lithium metal counter electrode. An electrolyte was introduced to manufacture the 2032-type coin cell. The electrolyte was a solution in which LiPF₆ of 1.1 M was dissolved in a solvent where ethylene carbonate (EC) and ethylmethyl carbonate (EMC) were mixed together in a volume ratio of 3:5.

### Comparative Example 1: Fabrication of Positive Electrode Active Material

A positive electrode active material was manufactured by the same method as that of Embodiment 1, except that the first coating process, the second coating process, and the second calcination process were omitted in Preparation 2.

### Evaluation Example 1: Internal Shape Analysis (SEM) of Positive Electrode Active Material

After sampling an internal cross-section of the positive electrode active material fabricated in Embodiment 1, the internal cross-section of the positive electrode active material was captured with a scanning electron microscope (SEM) to perform an internal shape analysis. Thus, a primary particle within the first particle was analyzed on a configuration thereof.

An S-4800 from Hitachi, Ltd. and a Magellan 400L from FEI Company were used as a scanning electron microscope. The sample cross-section was pretreated by milling for 1 hour at 6 kV and 320 µA using an IM4000PLUS from Hitachi, Ltd. A scanning electron microscope analysis was carried out at 3 keV to 30 keV.

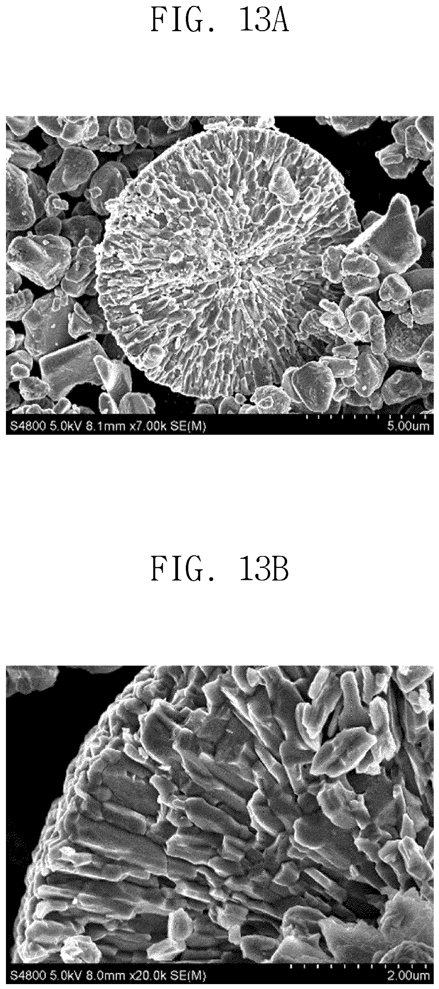

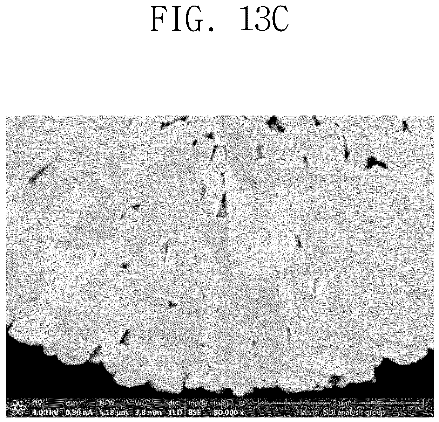

FIGS. 13A, 13B, and 13C are SEM images showing a cross-section of the first particle of Embodiment 1. Referring to FIGS. 13A to 13C, as like shown in FIG. 8, it may be possible to find a radially structured first primary particle PRP1 and a second primary particle PRP2 on a surface of the first primary particle PRP1. It may be ascertained that the first primary particle PRP1 has high orientation in the radial direction RD, and that the second primary particle PRP2 has low orientation in the radial direction RD.

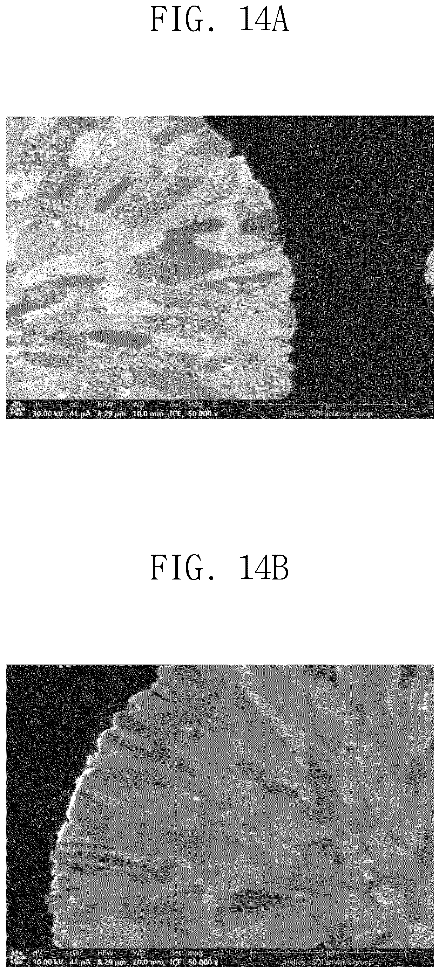

FIGS. 14A-14B represent SEM images showing cross-sections of the first particle of Embodiment 1 and the first particle of Comparative Example 1, respectively. Referring to FIG. 14A, as like shown in FIG. 8, it may be possible to find a radially structured first primary particle PRP1 and a second primary particle PRP2 on a surface of the first primary particle PRP1. Referring to FIG. 14B, as like shown in FIG. 10, only a first primary particle PRP1 may be found. For example, it may be ascertained that the second primary particle PRP2 is omitted in the first particle of Comparative Example 1.

In FIG. 14A, an average aspect ratio of the first primary particles PRP1 shown in the SEM image was measured to be about 8. An average aspect ratio of the second primary particles PRP2 shown in the SEM images was measured to be about 2.

### Evaluation Example 2: Analysis on Internal Composition and Porosity of Positive Electrode Active Material

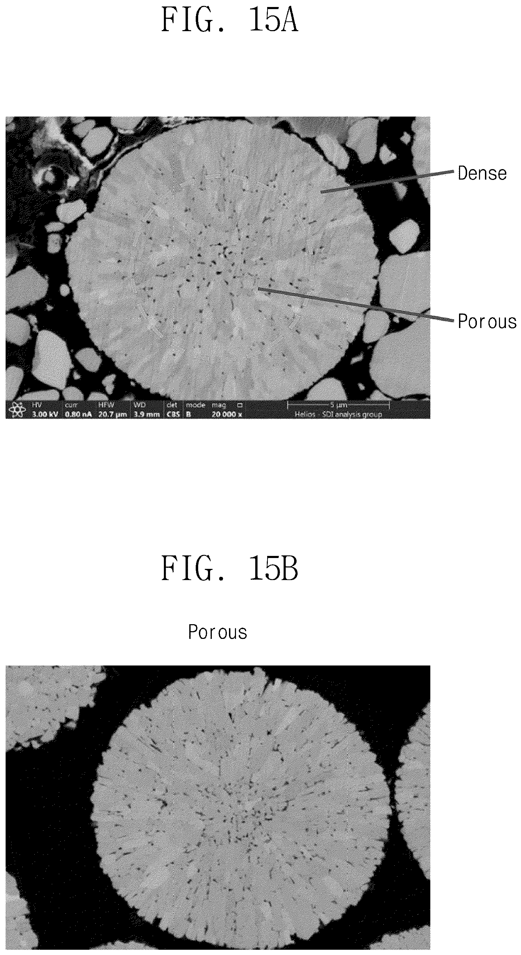

Amounts of nickel and cobalt in the shell of the first particle were measured through SEM analysis performed in Evaluation Example 1 and energy dispersive X-ray spectroscopy (EDS) carried out together with the SEM analysis. The SEM-EDS analysis was performed targeting a depth of 500 nm from an exposed surface of a cross-section taken along a central portion of a particle. In addition, a porosity of the first particle was measured through SEM image analysis on the particle cross-section. The results thereof are listed in Table 1 below. FIGS. 15A-15B are an image showing a porosity of the first particle of Embodiment 1 and an image showing a porosity of the first particle of Comparative Example 1, respectively.

**Table 1**

| | Shell, Ni/(Ni+Co) | Porosity of core / total average porosity |
|---|---|---|
| Embodiment 1 | 78 at% | 1.8 |
| Comparative Example 1 | 95 at% | 1.3 |

Referring to Table 1 and FIGS. 15A-15B, it may be found that the first particle of Comparative Example 1 has a relatively large amount of Ni in the shell. In contrast, it may be found that the first particle of Embodiment 1 has a relatively small amount of Ni in the shell. For example, the first particle of Embodiment 1 has a relatively large amount of Co in the shell. It may be ascertained that the first particle of Embodiment 1 has a relatively large porosity of the core and a relatively small porosity of the shell. In this sense, it may be ascertained that the first particle of Embodiment 1 includes a porous core and a dense shell. It may be ascertained that the first particle of Comparative Example 1 has a relatively large porosity of the core and also has a relatively large porosity of the shell. In this sense, it may be ascertained that the first particle of Comparative Example 1 has a porous core and a porous shell. Because the aforementioned atypically shaped second primary particles PRP2 constitute the shell of the first particle PTC1 of Embodiment 1, the shell of the first particle PTC1 of Embodiment 1 may have a reduced porosity. This may be found from the description with reference to FIGS. 9A-9B.

### Evaluation Example 3: Analysis on Shell/Surface Composition and Porosity of Positive Electrode Active Material

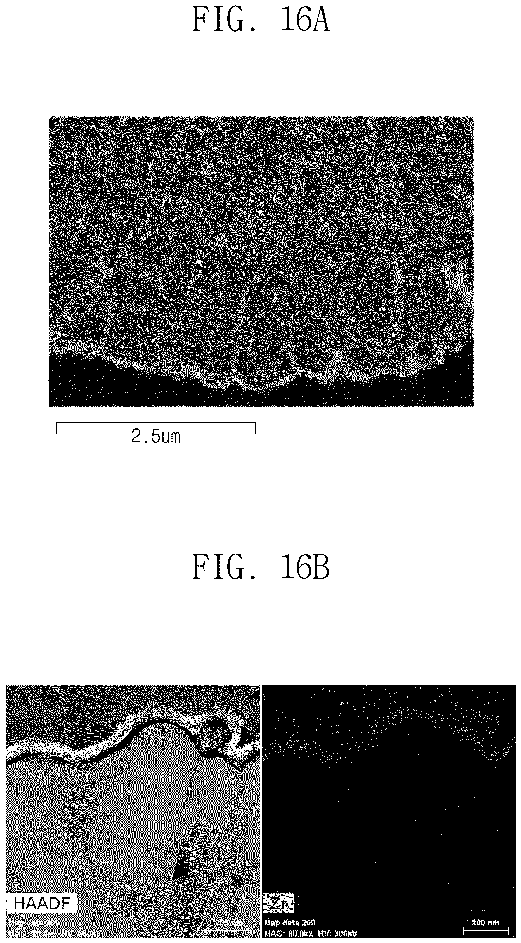

FIG. 16A is an image showing a cobalt element in the first particle of Embodiment 1 through the SEM-EDS analysis performed in Evaluation Example 2. In addition, FIG. 16B represents an image showing a zirconium element in the first particle of Embodiment 1 through energy dispersive X-ray spectroscopy (EDS) analysis using a transmission electron microscope (TEM). The TEM-EDS analysis was performed using a Titan Cubed G2 60-300 from FEI Company and a Spectra 300 from Thermo Fisher Scientific Inc.

Referring to FIG. 16A, it may be ascertained that cobalt is present in the form of a coating layer on a surface of the first particle. It may also be ascertained that cobalt is present in the form of a grain boundary coating layer on a grain boundary in an interior of the first particle. Referring to FIG. 16B, it may be ascertained that zirconium is present in the form of a coating layer on a periphery of a surface other than the interior of the first particle.

### Evaluation Example 4: Analysis of Coating Layer of Positive Electrode Active Material

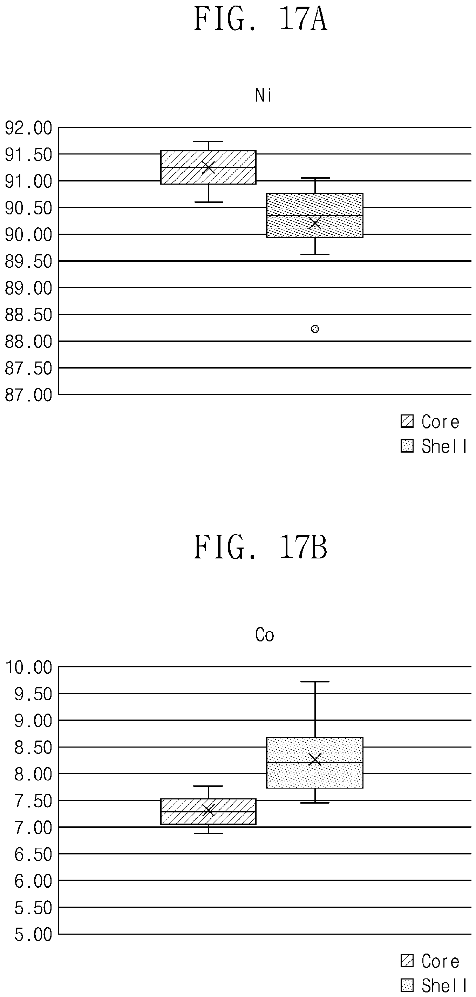

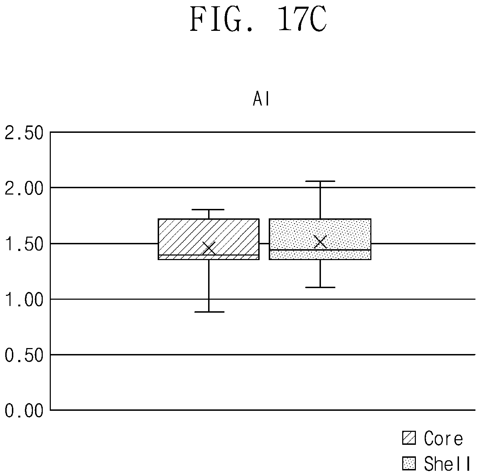

The SEM-EDS analysis performed in Evaluation Example 2 was used to measure and compare amounts of transition metals (Ni, Co, and Al) in the shell and the core of the first particle of Embodiment 1. The results thereof are plotted in FIGS. 17A-17C.

Referring to FIGS. 17A-17C, the core and the shell of the first particle have almost the same aluminium (Al) amount of about 1.5 at%. It may be observed that an amount of Ni in the core of the first particle is greater than an amount of Ni in the shell of the first particle. It may be observed that an amount of Co in the core of the first particle is less than an amount of Co in the shell of the first particle. This may be caused by the fact that the first particle of Embodiment 1 is coated with a cobalt layer suitably or satisfactorily formed on a particle surface and a grain boundary adjacent to the particle surface and thus an amount of Co in the shell is relatively increased. It may also be observed that the Co coating is difficult to proceed to the core of the first particle.

The SEM-EDS and TEM-EDS analysis performed in Evaluation Example 3 was used to measure amounts of cobalt and zirconium in the surface (or shell) of the first particle of Embodiment 1, and the results thereof are listed in Table 2 below.

**Table 2**

| | Cobalt amount (A) (Co/total amount of transition metals) | Zirconium amount (B) (Zr/total amount of transition metals) | A/B |
|---|---|---|---|
| Embodiment 1 | 8.2 at% | 0.12 at% | 68 |
| Comparative Example 1 | 3.9 at% | 0 at% | ∞ |

Referring to Table 2, it can be seen that, in the positive electrode active material of Embodiment 1, a surface coating layer has a relatively large amount of cobalt and a relatively small amount of zirconium. It may also be seen that an amount ratio of cobalt to zirconium is relatively large.

### Evaluation Example 5: HR-TEM analysis on Surface of Positive Electrode Active Material

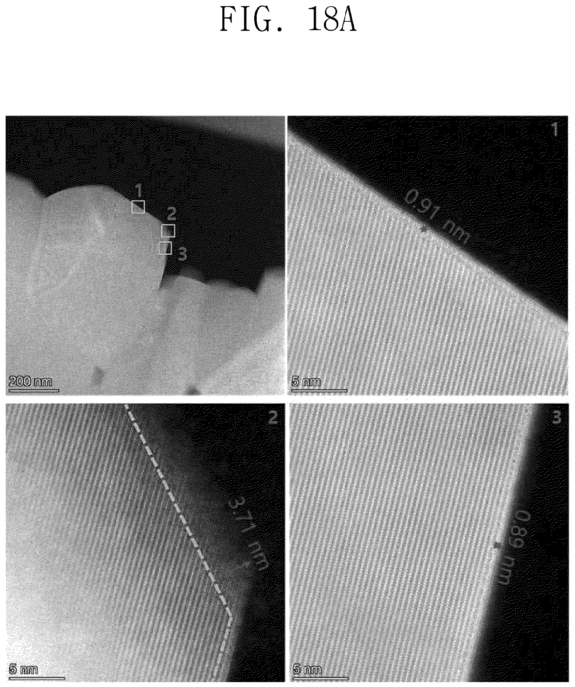

A high-resolution transmission electron microscope (HR-TEM) was used to measure thicknesses of disordered layers of surfaces of the first particle of Embodiment 1 and the first particle of Comparative Example 1. The results thereof are illustrated in FIGS. 18A-18B.

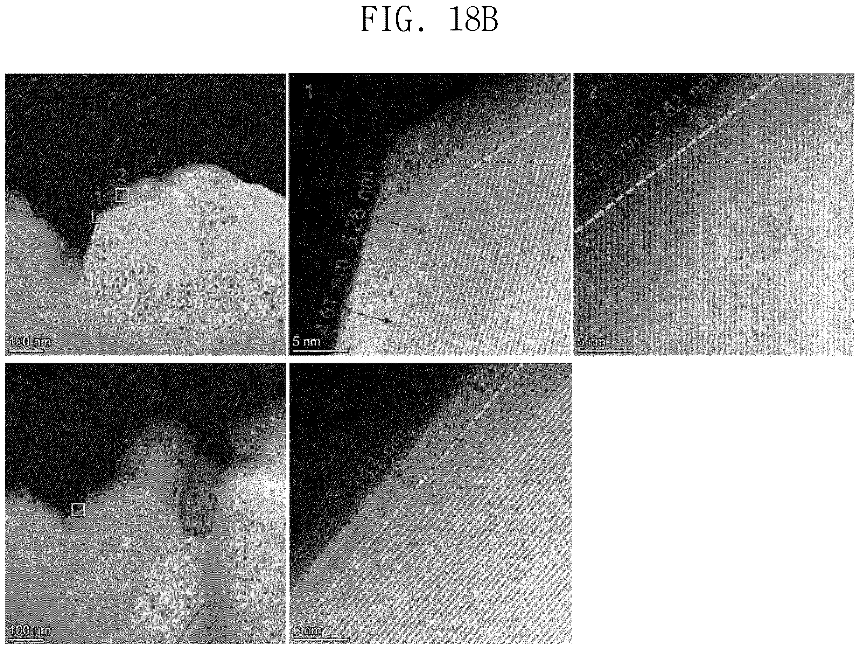

Referring to FIG. 18B, it may be ascertained that, in the case of the first particle of Comparative Example 1, the surface disordered layer has a relatively large thickness of 1.91 nm to 5.28 nm. Referring to FIG. 18A, it may be ascertained that, in the case of the first particle of Embodiment 1, the surface disordered layer has a relatively small thickness of 0.89 nm to 3.71 nm. In this sense, the first particle of Embodiment 1 may have relatively small surface defects and the active material may increase in performance and lifetime.

### Evaluation Example 6: XRD Analysis of Positive Electrode Active Material

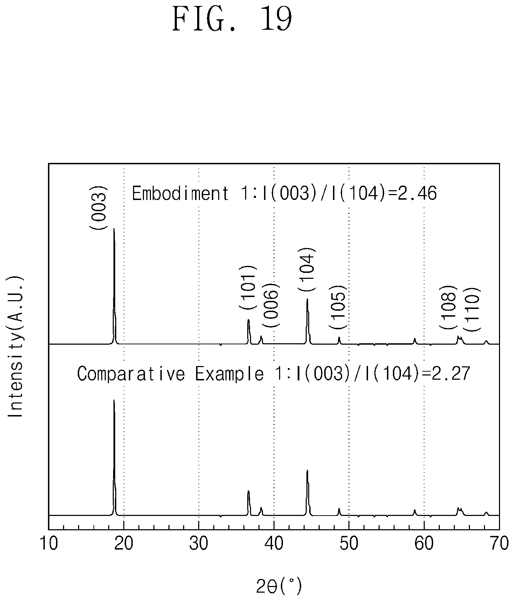

An XRD analysis was performed on the positive electrode active material fabricated in Embodiment 1, and the results thereof are plotted in FIG. 19.

Referring to FIG. 19, a peak intensity ratio (I(003) /I(104)) of a primary peak of (003) plane to a secondary peak of (104) plane was obtained from an XRD spectrum, and a full width at half maximum (FWHM) with respect to the (003) plane was obtained from the XRD spectrum. The FWHW was used to calculate a crystal grain size. It may be ascertained that the first particle of Embodiment 1 has a crystal grain size of 85.0 nm. It may be ascertained that the I(003) / I(104) of Embodiment 1 is relatively large and that orientation of the (003) plane is increased.

As a result, the positive electrode active material of Embodiment 1 may have high structural stability, and thus lithium ions may be stably intercalated and deintercalated to increase lifetime properties.

### Evaluation Example 7: Measurement of Angle between Radial Direction and A-axis of Primary Particle included in Positive Electrode Active Material

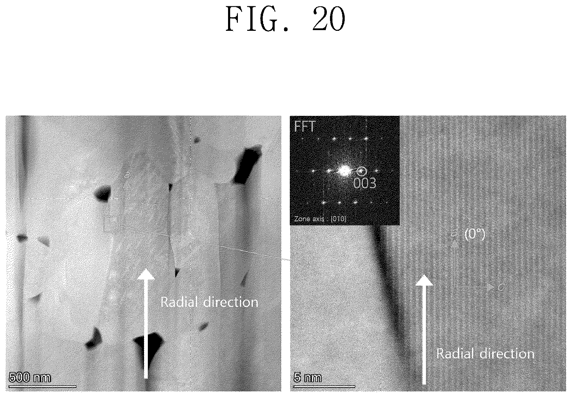

A high-resolution transmission electron microscope (HR-TEM) was used to measure the core and the shell of the first particle of Embodiment 1, and results are shown in FIGS. 20-21. Referring to FIG. 20, a first primary particle may be ascertained which constitutes the core of the first particle of Embodiment 1. An angle between a radial direction and an a-axis of the first primary particle was measured to be about 0°. For example, it may be ascertained that the radial direction and the a-axis of the first primary particle are substantially parallel to each other.

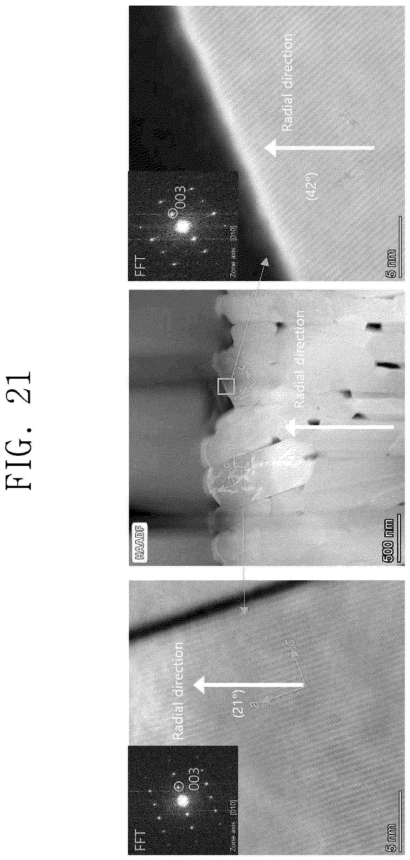

Referring to FIG. 21, an angle between a radial direction and an a-axis of a second primary particle that constitutes the shell of the first particle of Embodiment 1 was variously changed. For example, an angle between the radial direction and the a-axis of one second primary particle was measured to be about 21°, but an angle between the radial direction and the a-axis of another second primary particle was measured to be about 42°. In this sense, an a-axis direction of the second primary particle was random.

### Evaluation Example 8: Lifetime Properties of Rechargeable Lithium Battery

A capacity retention rate of the coin cell of Embodiment 2 was evaluated by using a charge-discharge machine (Model: TOYO-3100 manufactured by TOYO Corporation).

A coin cell, which was assembled for evaluation of an initial capacity (1^{st} charge capacity, 1^{st} discharge capacity) and initial efficiency properties, was charged with a constant current of 0.2 C at 25 °C until a voltage reached 4.3 V and then was charged with a constant voltage until a current reached 0.05 C, and the fully charged cell was paused for about 10 minutes and then was discharged with a constant current of 0.2 C until a voltage reached 3 V. To evaluate a capacity retention rate due to the repeated charging and discharging, the coin cell was charged with a constant current of 1 C at 45 °C until a voltage reached 4.4 V and then was charged with a constant voltage until a current reached 0.05 C, and the fully charged cell was paused for about 10 minutes and then was discharged with a constant current of 1 C until a voltage reached 3 V, which charging and discharging cycles were repeatedly carried out at 60 times.

A coin cell was manufactured in the same manner as that of Embodiment 2 by using the positive electrode active material of Comparative Example 1. The coin cell of Comparative Example 1 was evaluated by the same method discussed above. The results thereof are listed in Table 3.

**Table 3**

| | 1^{st} charge capacity (mAh/g) | 1^{st} discharge capacity (mAh/g) | Initial efficiency (%) | Capacity retention rate at 60^{th} (%) |
|---|---|---|---|---|
| Embodiment 2 | 242 | 212 | 87.6 | 95.4 |
| Comparative Example 1 | 243 | 212 | 87.5 | 90.7 |

Referring to Table 3, it can be seen that a capacity retention rate (or lifetime properties) of Comparative Example 1 is much less than that of Embodiment 2. In the case of Comparative Example 1, it may be believed that non-uniformity of a coating layer and morphology of the first particle as shown in FIG. 10 accelerate deterioration of particles of long lifetime to thereby rapidly reduce performance. In the case of Embodiment 2, it may be ascertained that particle morphology as shown in FIG. 7 and the uniform coating layer induces a reduction in resistance and an increase in particle stability to thereby improve high-temperature long lifetime properties.

A positive electrode active material according to embodiments of the present disclosure may include a radially structured first primary particle and an atypically shaped second primary particle provided on one end of the first primary particle. Morphology of the positive electrode active material may cause the positive electrode active material to have a uniform (or substantially uniform) coating layer, which may result in an improvement in structural stability. A positive electrode active material according to the present disclosure may prevent or reduce the occurrence of internal cracks due to shrinkage and expansion, and thus a rechargeable battery may improve in charge-discharge capacity and lifetime properties.

While the subject matter of this disclosure has been described in connection with what is presently considered to be example embodiments, it is to be understood that the present disclosure is not limited to the disclosed embodiments and is intended to cover various modifications and equivalent arrangements included within the scope of the appended claims and equivalents thereof, and therefore the aforementioned embodiments should be understood to be examples but not limiting this disclosure in any way.

## Claims

1. A positive electrode active material comprising a first particle comprising a first lithium composite oxide,
wherein the first lithium composite oxide is represented by Chemical Formula 1,
Chemical Formula 1 Liₐ₁Niₓ₁Ma₁₋ₓ₁O_{b1}
wherein, in Chemical Formula 1,
a1 is about 0.5 to about 1.5,
x1 is about 0.6 to about 0.99,
b1 is about 1.8 to about 2.2,
1-x1 is about 0.01 to about 0.4, and
Ma comprises at least one element selected from B, Co, Al, Mn, Na, Mg, Ca, Y, Ti, Hf, V, Nb, Ta, Cr, Mo, W, Zr, Sr, La, Fe, Cu, Ag, Zn, Ga, C, Si, and Sn,
wherein the first particle comprises:
a first primary particle that extends in a radial direction from a center of the first particle toward a surface of the first particle; and
a second primary particle on the surface of the first particle,
wherein an aspect ratio of the first primary particle is about 2 to about 15, and
wherein an aspect ratio of the second primary particle is about 0.7 to about 3.

2. The positive electrode active material as claimed in claim 1, wherein an angle between the radial direction and an a-axis of the first primary particle is about 0° to about 5°.

3. The positive electrode active material as claimed in claim 1 or claim 2,
wherein the first primary particle comprises a (003) plane that extends in the radial direction.

4. The positive electrode active material as claimed in any one of claims 1 to 3, wherein the first primary particle has a width in a direction that intersects the radial direction, and
wherein the width of the first primary particle increases in the radial direction.

5. The positive electrode active material as claimed in any one of claims 1 to 4, wherein an angle between the radial direction and an a-axis of the second primary particle is about 10° to about 80°.

6. The positive electrode active material as claimed in any one of claims 1 to 5, wherein the second primary particle is on one end of the first primary particle.

7. The positive electrode active material as claimed in any one of claims 1 to 6, wherein the first particle further comprises a third primary particle at a center of the first particle,
wherein the first primary particle extends from the third primary particle toward the second primary particle, and
wherein an aspect ratio of the third primary particle is about 0.7 to about 3.

8. The positive electrode active material as claimed in any one of claims 1 to 7, wherein the first particle comprises a core and a shell,
wherein an amount of Ni in the core is greater than an amount of Ni in the shell,
wherein an amount of Co in the shell is greater than an amount of Co in the core, and
wherein a ratio (Ni/(Ni+Co)) of an amount of Ni to a total amount of Ni and Co in the shell is about 70 at% to about 90 at%.

9. The positive electrode active material as claimed in any one of claims 1 to 8, wherein the first particle further comprises a first coating layer on the surface,
wherein the first coating layer comprises cobalt (Co) and zirconium (Zr),
wherein an amount of cobalt is about 20 at% to about 50 at% relative to a total amount of transition metals in the first coating layer, and
wherein an amount of zirconium is about 0.001 at% to about 1 at% relative to the total amount of transition metals in the first coating layer.

10. The positive electrode active material as claimed in any one of claims 1 to 9, wherein the first particle comprises a core and a shell, and
wherein a ratio of a porosity of the core to an average porosity of the first particle is about 1.5 to about 2.0.

11. The positive electrode active material as claimed in any one of claims 1 to 10, wherein the first particle has a first average particle diameter, and
wherein the first average particle diameter is about 6.0 µm to about 20.0 µm.

12. The positive electrode active material as claimed in any one of claims 1 to 11, further comprising a second particle comprising a second lithium composite oxide,
wherein a first average particle diameter of the first particle is greater than a second average particle diameter of the second particle,
wherein the second lithium composite oxide is represented by Chemical Formula 2,
Chemical Formula 2 Liₐ₂Niₓ₂Mb₁₋ₓ₂Fl_{w2}O_{b2}
wherein, in Chemical Formula 2,
a2 is about 0.5 to about 1.5,
x2 is about 0.6 to about 0.99,
b2 is about 1.8 to about 2.2,
1-x2 is about 0.01 to about 0.4,
w2 is about 0.0005 to about 0.01,
Mb comprises at least one element selected from Co, Al, Mn, Na, Mg, Ca, Y, Ti, Hf, V, Nb, Ta, Cr, Mo, W, Zr, Sr, La, Fe, Cu, Ag, Zn, B, Ga, C, Si, and Sn, and
Fl comprises at least one element selected from Zr, Sr, Y, La, Mo, Ce, Nb, and S.

13. The positive electrode active material as claimed in claim 12, wherein a size of a crystal grain of the second particle is greater than an average size of the first and second primary particles.

14. A positive electrode active material comprising a first particle comprising a first lithium composite oxide,
wherein the first lithium composite oxide is represented by Chemical Formula 1,
Chemical Formula 1 Liₐ₁Niₓ₁Ma₁₋ₓ₁O_{b1}
wherein, in Chemical Formula 1,
a1 is about 0.5 to about 1.5,
x1 is about 0.6 to about 0.99,
b1 is about 1.8 to about 2.2,
1-x1 is about 0.01 to about 0.4, and
Ma comprises at least one element selected from B, Co, Al, Mn, Na, Mg, Ca, Y, Ti, Hf, V, Nb, Ta, Cr, Mo, W, Zr, Sr, La, Fe, Cu, Ag, Zn, Ga, C, Si, and Sn,
wherein the first particle comprises:
a first primary particle that extends in a radial direction from a center of the first particle toward a surface of the first particle; and
a second primary particle on the surface of the first particle,
wherein an angle between the radial direction and an a-axis of the first primary particle is about 0° to about 5°, and
wherein an angle of the radial direction and an a-axis of the second primary particle is about 10° to about 80°.

15. A rechargeable lithium battery comprising the positive electrode active material as claimed in any one of claims 1 to 14.
